(19) **Europäisches Patentamt**
**European Patent Office**
**Office européen des brevets**

(11) **EP 4 593 443 A1**

(12) **EUROPEAN PATENT APPLICATION**
published in accordance with Art. 153(4) EPC

(43) Date of publication:
**30.07.2025 Bulletin 2025/31**

(21) Application number: 23868656.2

(22) Date of filing: **22.09.2023**

(51) International Patent Classification (IPC):
*H04W 16/14* (2009.01)   *H04W 74/08* (2024.01)
*H04L 5/14* (2006.01)   *H04L 5/00* (2006.01)
*H04W 72/23* (2023.01)   *H04W 72/04* (2023.01)

(52) Cooperative Patent Classification (CPC):
**H04L 5/00; H04L 5/14; H04W 16/14; H04W 72/04;
H04W 72/23; H04W 74/08**

(86) International application number:
**PCT/KR2023/014514**

(87) International publication number:
**WO 2024/063604 (28.03.2024 Gazette 2024/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **23.09.2022 KR 20220121185**

(71) Applicant: **LG Electronics Inc.**
**Yeongdeungpo-gu**
**Seoul 07336 (KR)**

(72) Inventors:
• **KIM, Seonwook**
  **Seoul 06772 (KR)**
• **KIM, Kijun**
  **Seoul 06772 (KR)**
• **AHN, Joonkui**
  **Seoul 06772 (KR)**
• **KO, Hyunsoo**
  **Seoul 06772 (KR)**

(74) Representative: **Mooser, Sebastian Thomas**
**Wuesthoff & Wuesthoff**
**Patentanwälte und Rechtsanwalt PartG mbB**
**Schweigerstraße 2**
**81541 München (DE)**

(54) **DEVICE AND METHOD FOR PERFORMING FULL-DUPLEX BASED COMMUNICATION IN UNLICENSED BAND IN WIRELESS COMMUNICATION SYSTEM**

(57)    The present disclosure relates to performing full-duplex-based communication in an unlicensed band in a wireless communication system. A method for operating a base station may include transmitting system information including information related to a communication band, transmitting configuration information related to distinguishing an uplink resource and a downlink resource in the communication band, based on at least one of the system information or the configuration information, performing a first channel access procedure (CAP) for a first channel and a second channel included in the communication band, based on the first CAP being successful in the first channel, transmitting a signal in the first channel, and performing a second CAP for the second channel during transmission of the signal in the first channel.

```
BASE STATION                      TERMINAL
  (2020)                           (2010)
    |                                |
    |    FD SLOT CONFIGURATION       |
    |      INFORMATION(S2001)         |
    |------------------------------->|
    |                                |
    |         S2003 ─┐  ┌──────────────────────────┐
    |                └─┤ PERFORM CAP FOR RB SET     │
    |                  │ CONFIGURED AS UL IN FD SLOT│
    |                  └──────────────────────────┘
```

**FIG. 20**

## Description

Technical Field

The present disclosure relates to a wireless communication system, and more particularly, to an apparatus and method for performing full-duplex-based communication in an unlicensed band in a wireless communication system.

Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

Disclosure

Technical Problem

The present disclosure may provide an apparatus and method for effectively performing full-duplex (FD)-based communication in an unlicensed band in a wireless communication system.

The present disclosure may provide an apparatus and method for performing a channel access procedure (CAP) operation in another channel during a transmission operation in any one channel in an unlicensed band in a wireless communication system.

The present disclosure may provide an apparatus and method for configuring a subband or a bandwidth part (BWP) for FD-based communication in a wireless communication system.

The present disclosure may provide an apparatus and method for configuring a subband or a BWP for FD-based communication by considering performance of a CAP in an unlicensed band in a wireless communication system.

The present disclosure may provide an apparatus and method for configuring a subband or a BWP for FD-based communication in a channel unit of an unlicensed band in a wireless communication system.

The present disclosure may provide an apparatus and method for determining a communication direction based on a CAP result in an unlicensed band in a wireless communication system.

The present disclosure may provide an apparatus and method for adaptively adjusting an energy detection (ED) threshold for a CAP in an unlicensed band in a wireless communication system.

The present disclosure may provide an apparatus and method for differently determining an ED threshold for a CAP in an unlicensed band in a wireless communication system according to whether or not an FD operation is operated.

The present disclosure may provide an apparatus and method for defining an operation of each CAP type in an unlicensed band by considering an FD operation in a wireless communication system.

The present disclosure may provide an apparatus and method for determining a channel occupancy time (COT) by considering a CAP success time of each channel set for a multi-channel CAP in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

Technical Solution

As an example of the present disclosure, a method for operating a base station in a wireless communication system may include transmitting system information including information related to a communication band, transmitting configuration information related to distinguishing an uplink resource and a downlink resource in the communication band, based on at least one of the system information or the configuration information, performing a first channel access procedure (CAP) for a first channel and a second channel included in the communication band, based on the first CAP being successful in the first channel, transmitting a signal in the first channel, and performing a second CAP for the second channel during transmission of the signal in the first channel. The configuration information may include information related to a first threshold for energy detection (ED) for the first CAP and a second threshold for ED for the second CAP.

As an example of the present disclosure, a base station in a wireless communication may include a transceiver and a processor coupled with the transceiver, and the processor may be configured to transmit system information including information related to a communication band, to transmit configuration information related to distinguishing an uplink resource and a downlink resource in the communication band, based on at least one of the system information or the configuration information, to perform a first channel access procedure (CAP) for a first channel and a second channel included in the communication band, based on the first CAP being successful in the first channel, to transmit a signal in the first channel, and to perform a second CAP for the second channel during transmission of the signal in the first channel, and the configuration information may include information related to a first threshold for energy detection (ED) for the first CAP and a second threshold for ED for the second CAP.

As an example of the present disclosure, a communication device may include at least one processor and at least one computer memory coupled with the at least one processor and storing an instruction that instructs operations when executed by the at least one processor, and the operations may include transmitting system information including information related to a communication band, transmitting configuration information related to distinguishing an uplink resource and a downlink resource in the communication band, based on at least one of the system information or the configuration information, performing a first channel access procedure (CAP) for a first channel and a second channel included in the communication band, based on the first CAP being successful in the first channel, transmitting a signal in the first channel, and performing a second CAP for the second channel during transmission of the signal in the first channel. The configuration information may include information related to a first threshold for energy detection (ED) for the first CAP and a second threshold for ED for the second CAP.

As an example of the present disclosure, a non-transitory computer-readable medium storing at least one instruction may include the at least one instruction that is executable by a processor, and the at least one instruction may control a device to transmit system information including information related to a communication band, to transmit configuration information related to distinguishing an uplink resource and a downlink resource in the communication band, based on at least one of the system information or the configuration information, to perform a first channel access procedure (CAP) for a first channel and a second channel included in the communication band, based on the first CAP being successful in the first channel, to transmit a signal in the first channel, and to perform a second CAP for the second channel during transmission of the signal in the first channel, and the configuration information may include information related to a first threshold for energy detection (ED) for the first CAP and a second threshold for ED for the second CAP.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

Advantageous Effects

As is apparent from the above description, the embodiments of the present disclosure have the following effects.

According to the present disclosure, full-duplex-based communication can be effectively performed in an unlicensed band.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system to which the present disclosure may be applied.
FIG. 2 illustrates an example of a wireless device applicable to the present disclosure.
FIG. 3 illustrates a frame structure in a wireless communication system to which the present disclosure may be applied.

FIG. 4 illustrates an example of a resource grid in a wireless communication system to which the present disclosure may be applied.

FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8A and FIG. 8B illustrate an example of a wireless communication system supporting an unlicensed band that is applicable to the present disclosure.

FIG. 9 illustrates a flowchart of a channel access procedure (CAP) operation for downlink signal transmission of a base station through an unlicensed band.

FIG. 10 illustrates a flowchart of a Type 1 CAP operation of a terminal for uplink signal transmission.

FIG. 11 illustrates an example of a single resource element group (REG) structure.

FIG. 12 illustrates an example of a non-interleaved CCE-REG mapping type.

FIG. 13 illustrates an example of an interleaved CCE-REG mapping type.

FIG. 14 illustrates an example of a block interleaver.

FIG. 15 illustrates an example of a network initial access and communication procedure that is applicable to the present disclosure.

FIG. 16 illustrates an example of full-duplex communication between carriers that is applicable to the present disclosure.

FIG. 17A and FIG. 17B illustrate an example of coexistence of a time resource with half-duplex (HD) operation and a time resource with FD operation, which is applicable to the present disclosure.

FIG. 18 illustrates an example of a CAP operation for communication in an unlicensed band that is applicable to the present disclosure.

FIG. 19 illustrates another example of a CAP operation for communication in an unlicensed band that is applicable to the present disclosure.

FIG. 20 illustrates an example of a procedure of applying an FD operation to an unlicensed band in a wireless communication system according to an embodiment of the present disclosure.

FIG. 21 illustrates an example of a procedure of transmitting a signal by using an unlicensed band in a wireless communication system according to an embodiment of the present disclosure.

FIG. 22 illustrates an example of a procedure of determining a link direction of a channel in an unlicensed band in a wireless communication system according to an embodiment of the present disclosure.

FIG. 23 illustrates an example of a procedure of adaptively applying an ED threshold in a wireless communication system according to an embodiment of the present disclosure.

FIG. 24 illustrates an example of a procedure of determining availability of a channel in an unlicensed band in a wireless communication system according to an embodiment of the present disclosure.

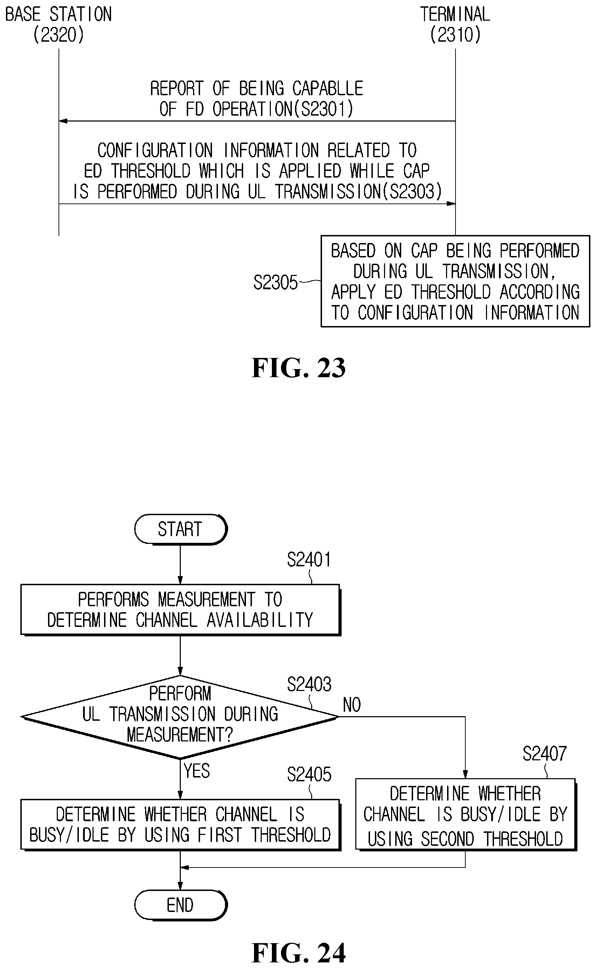

FIG. 24 illustrates an example of adjustment of a backoff counter value for a CAP in a wireless communication system according to an embodiment of the present disclosure.

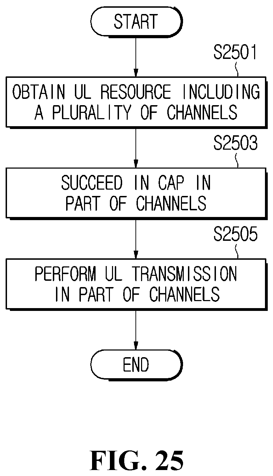

FIG. 25 illustrates an example of a procedure of transmitting a signal according to success of a CAP in a portion of allocated channels in a wireless communication system according to an embodiment of the present disclosure.

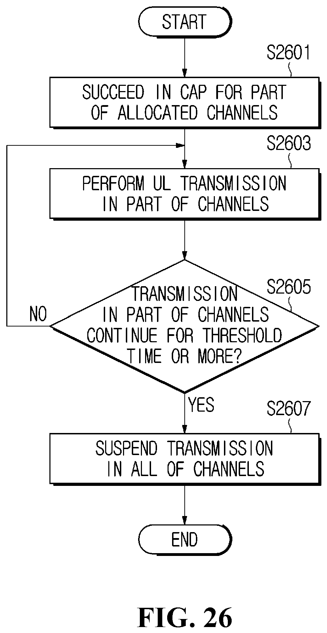

FIG. 26 illustrates an example of another procedure of transmitting a signal according to success of a CAP in a portion of allocated channels in a wireless communication system according to an embodiment of the present disclosure.

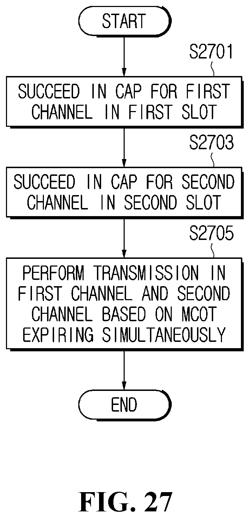

FIG. 27 illustrates an example of a procedure of transmitting a signal according to a channel occupancy time in a wireless communication system according to an embodiment of the present disclosure.

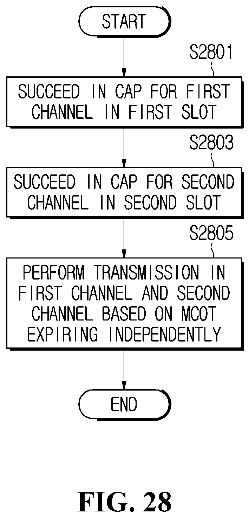

FIG. 28 illustrates an example of another procedure of transmitting a signal according to a channel occupancy time in a wireless communication system according to an embodiment of the present disclosure.

## Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. ABS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

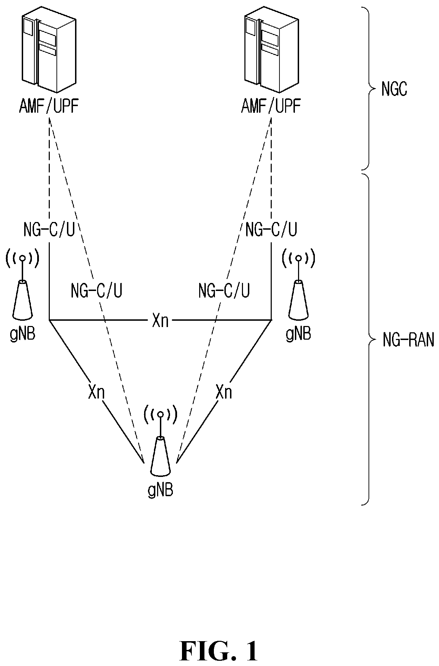

FIG. 1 exemplifies a structure of a wireless communication system to which the present disclosure may be applied. Referring to FIG. 1, NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

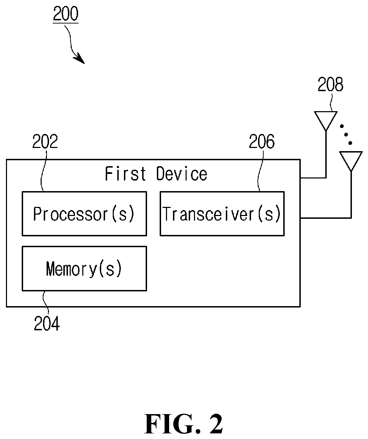

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

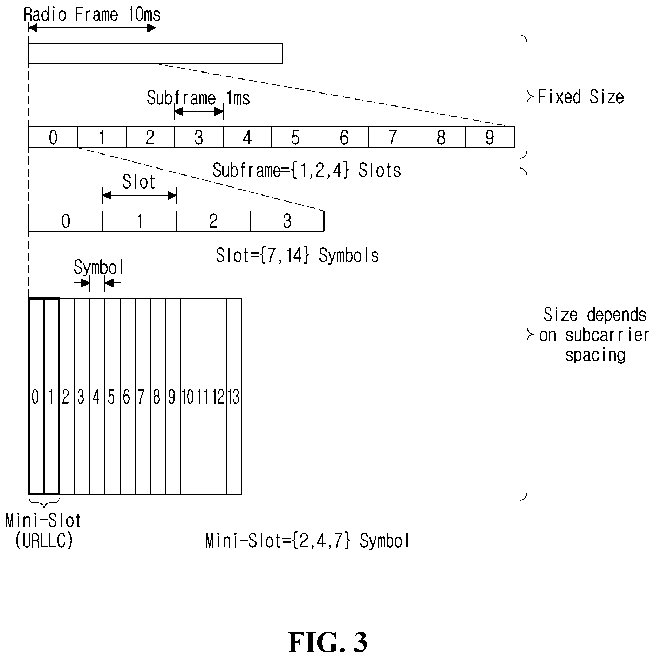

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or μ). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^\mu \cdot 15 [kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise. An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100)T_c = 10$ ms. Here, the radio frame is configured with 10 subframes having a duration of $T_{sf} = (\Delta f_{max} \cdot N_f/1000)T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset})T_c$ than a corresponding downlink frame in a corresponding terminal starts. For a subcarrier spacing configuration $\mu$, slots are numbered in an increasing order of $n_s^\mu \in \{0, \cdots, N_{slot}^{subframe,\mu} - 1\}$ in a subframe and are numbered in an increasing order of $n_{s,f}^\mu \in \{0, \cdots, N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^\mu$ in a subframe is temporally arranged with a start of an OFDM symbol $n_s^\mu N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ( $N_{symb}^{slot}$ ), the number of slots per radio frame ( $N_{slot}^{frame,\mu}$ ) and the number of slots per subframe ( $N_{slot}^{subframe,\mu}$ ) in a normal CP and Table 4 represents the number of OFDM symbols per slot, the number of slots per radio frame and the number of slots per subframe in an extended CP.

[Table 3]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on $\mu$=2 (SCS is 60 kHz), and referring to Table 3, 1 subframe may include 4 slots. 1 subframe= { 1,2,4} slot shown in FIG. 3 is an example, and the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi colocation (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

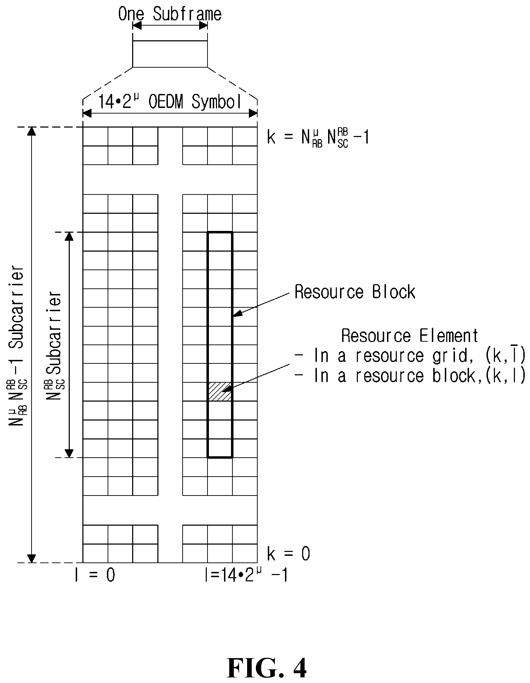

FIG. 4 exemplifies a resource grid in a wireless communication system to which the present disclosure may be applied.

Referring to FIG. 4, as an illustrative description, a resource grid is configured with $N^{\mu}_{RB}N^{RB}_{SC}$ subcarriers in a frequency domain, and one subframe is configured with $14 \cdot 2^{\mu}$ OFDM symbols, but the resource grid and the subframe are not limited thereto. In an NR system, a transmitted signal is described by one or more resource grids configured with $2^{\mu}N^{(\mu)}_{symb}$ OFDM symbols and $N^{\mu}_{RB}N^{RB}_{SC}$ subcarriers. Here, $N^{\mu}_{RB} \leq N^{\max,u}_{RB}$. The $N^{\max,\mu}_{RB}$ represents a maximum transmission bandwidth, which may be different between an uplink and a downlink as well as between numerologies. In this case, one resource grid may be configured per $\mu$ and antenna port p. Each element of a resource grid for $\mu$ and an antenna port p is referred to as a resource element and is uniquely identified by an index pair (k, l'). Here, $k=0, \ldots, N^{\mu}_{RB}N^{RB}_{SC}-1$ is an index in a frequency domain and $l'=0, \ldots, 2^{\mu}N^{(\mu)}_{symb}-1$ refers to a position of a symbol in a subframe. When referring to a resource element in a slot, an index pair (k, l) is used. Here, $l=0, \ldots, 2^{\mu}N^{(\mu)}_{symb}-1$. A resource element (k, l') for $\mu$ and an antenna port p corresponds to a complex value, $a^{(p,\mu)}_{k,f}$. When there is no risk of confusion or when a specific antenna port or numerology is not specified, indexes p and $\mu$ may be dropped, whereupon a complex value may be $a^{(p)}_{k,l'}$ or $a_{k,l'}$. In addition, a resource block (RB) is defined as $N^{RB}_{sc}=12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n^{\mu}_{CRB}$ and a resource element (k, l) for a subcarrier spacing configuration $\mu$ in a frequency domain is given as in the following Equation 1.

[Equation 1]

$$n^{\mu}_{CRB} = \left\lfloor \frac{k}{N^{RB}_{sc}} \right\rfloor$$

In Equation 1, k is defined relatively to point A so that k=0 corresponds to a subcarrier centering around point A.

Physical resource blocks are numbered from 0 to $N_{BWP,i}^{size,\mu} - 1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$n_{CRB}^{\mu} = n_{PRB}^{\mu} + N_{BWP,i}^{start,\mu}$$

$N_{BWP,i}^{start,\mu}$ is a common resource block that a BWP starts relatively to common resource block 0.

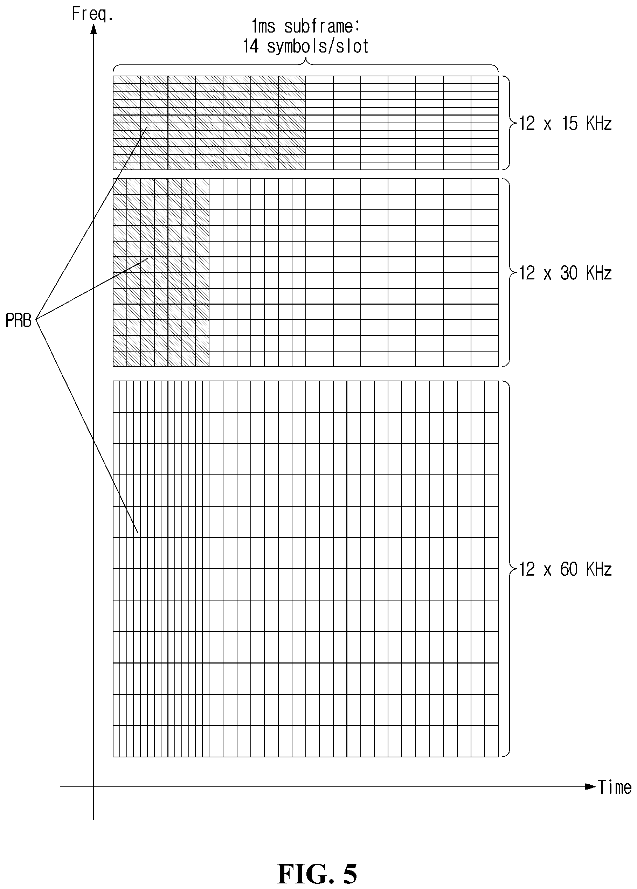

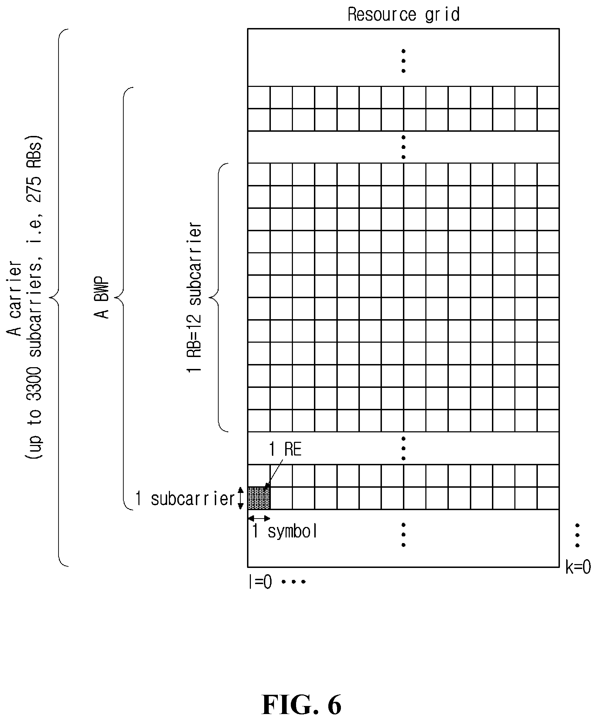

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6 , a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

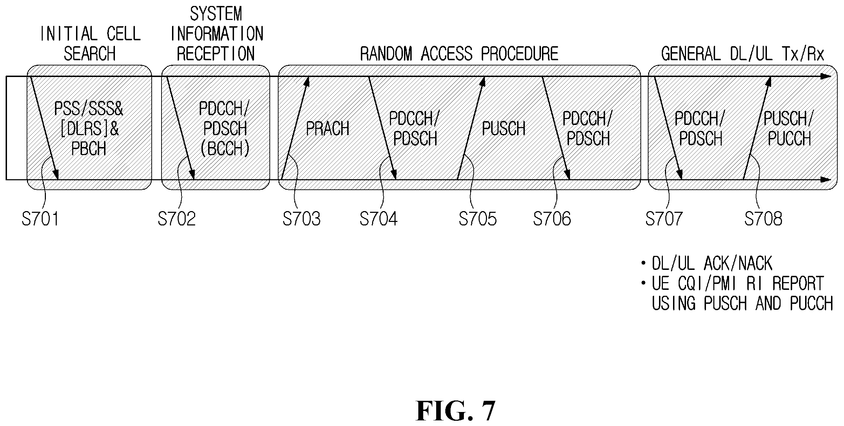

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

Wireless communication system supporting unlicensed band

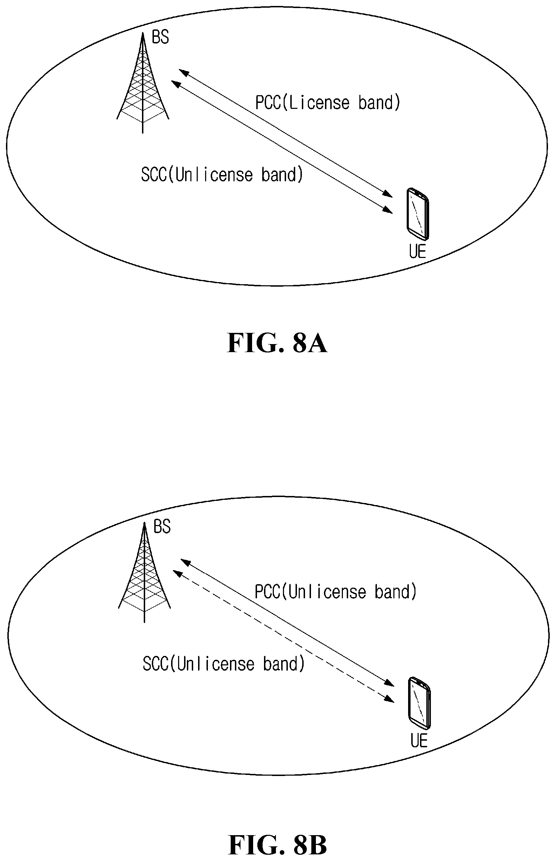

FIG. 8A and FIG. 8B illustrate an example of a wireless communication system supporting an unlicensed band that is applicable to the present disclosure. In the description below, a cell operating in a licensed band (hereinafter, L-band) is defined as an L-cell, and a carrier of the L-cell is defined as a (DL/UL) LCC. In addition, a cell operating in an unlicensed band (hereinafter, U-band) is defined as a U-cell, and a carrier of the U-cell is defined as a (DL/UL) UCC. A carrier/carrier-frequency of a cell may mean an operation frequency of the cell (e.g., center frequency). Cell/carrier (e.g. CC) is collectively referred to as cell.

In case carrier aggregation is supported, one terminal may perform transmission/reception of a signal with a base station through a plurality of aggregated cells/carriers. In case a plurality of CCs are configured in a single terminal, one CC may be set as a primary CC (PCC) and the remaining CCs may be set as a secondary CC (SCC). Particular control information/channel (e.g., CSS PDCCH, PUCCH) may be configured to be transmitted and received through a PCC. Data may be transmitted and received through a PCC/SCC. As shown in FIG. 8A, in case a terminal and a base station transmit and receive a signal through carrier-aggregated LCC and UCC (non-standalone (NSA) mode), the LCC may be set as a PCC and the UCC may be set as an SCC. In case a plurality of LCCs are configured in a terminal, one specific LCC may be set as a PCC, and the remaining LCCs may be set as an SCC. As shown in FIG. 8B, a terminal and a base station may transmit and receive a signal through a single UCC or a plurality of carrier-aggregated UCCs. That is, the terminal and the base station may transmit and receive a signal only through UCC(s) without LCC (SA mode). In this case, one of the UCCs may be set as a PCC and the remaining UCCs may be set as an SCC. In an unlicensed band of a 3GPP system, both NSA mode and SA mode may be supported.

Hereinafter, (unless otherwise stated) in the present disclosure, the above-described signal transmission/reception operation in an unlicensed band may be performed in all the above-described placement scenarios.

Hereinafter, in the present disclosure, the above-described carrier may also be described by being replaced by a channel.

Downlink signal transmission method through unlicensed band

A base station may perform one of the following unlicensed band access procedures (e.g., channel access procedure (CAP)) to transmit a downlink signal in an unlicensed band.

(1) First downlink CAP method

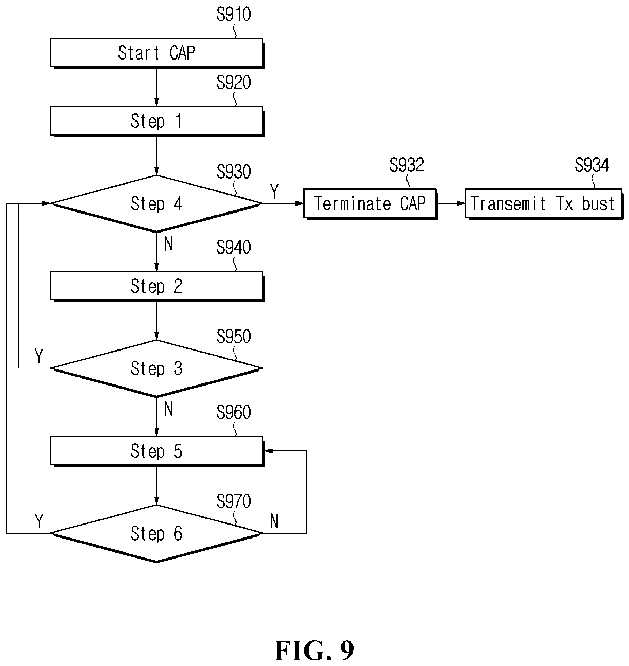

FIG. 9 illustrates a flowchart of a channel access procedure (CAP) operation for downlink signal transmission of a base station through an unlicensed band. For the downlink signal transmission through the unlicensed band (e.g., signal transmission including PDSCH/PDCCH), the base station may start a CAP (S910). The base station may randomly select a backoff counter N within a contention window (CW) according to Step 1. Herein, the value of N is set to an initial value $N_{init}$ (S920). $N_{init}$ is selected as an arbitrary value between 0 and $CW_p$. Next, according to Step 4, if the backoff counter value N is 0 (Y of S930), the base station terminates the CAP (S932). Next, the base station may perform Tx burst transmission including a PDSCH/PDCCH (S934). On the other hand, if the backoff counter value is not 0 (N of S930), the base station decreases the backoff counter value by 1 according to Step 2 (S940). Next, the base station checks whether or not a channel of U-cell(s) is idle (S950), and if it is idle (Y of S950), the base station checks whether or not the backoff counter value is 0 (S930). On the other hand, at step S950, if the channel is not idle, that is, if the channel is busy (N of S950), the base station checks whether or not the channel is idle for a defer duration $T_d$ (longer than 25 usec) longer than a slot time (e.g., 9 usec) (S960). If the channel is idle for the defer duration (Y of S970), the base station may restart the CAP. Herein, the defer duration may consist of a 16 usec interval and immediate subsequent $m_p$ successive slot times (e.g., 9 usec). On the other hand, if the channel is busy for the defer duration (N of S970), the base station performs step S960 again and checks again whether or not the channel of U-cell(s) is idle for a new defer duration.

Table 5 exemplifies variations of $m_p$, minimum CW, maximum CW, maximum channel occupancy time (MCOT) and allowed CW sizes, which are applied to a CAP, according to channel access priority classes.

[Table 5]

| Channel Access Priority Class ($p$) | $m_p$ | $CW_{min,p}$ | $CW_{max,p}$ | $T_{m\,cot,p}$ | allowed $CW_p$ sizes |
|---|---|---|---|---|---|
| 1 | 1 | 3 | 7 | 2 ms | {3,7} |
| 2 | 1 | 7 | 15 | 3 ms | {7,15} |
| 3 | 3 | 15 | 63 | 8 or 10 ms | { 15,31,63 } |
| 4 | 7 | 15 | 1023 | 8 or 10 ms | { 15,31,63,127, 255,511,1023 } |

A contention window size applied to a first downlink CAP may be determined based on various methods. As an example, the contention window size may be adjusted based on a probability in which HARQ-ACK values corresponding to PDSCH transmission(s) within a predetermined time interval (e.g., reference TU) are determined as NACK. In case a base station performs downlink signal transmission including a PDSCH related to a channel access priority class p in a carrier, if a probability, in which HARQ-ACK values corresponding to PDSCH transmission(s) within a reference time interval/occasion k (or reference slot k) are determined as NACK, is at least Z = 80%, the base station increases CW values set for each priority class to each next allowed higher priority. Alternatively, the base station maintains CW values set for each priority class at an initial value. A reference time interval/occasion (or reference slot) may be defined as a start time interval/occasion (or start slot) on which a latest signal transmission is performed in a carrier for which at least partial HARQ-ACK feedback is available.

(2) Second downlink CAP method

Based on the second downlink CAP method described below, a base station may perform downlink signal transmission through an unlicensed band (e.g., signal transmission including discovery signal transmission but not PDSCH).

In case a length of a signal transmission interval of a base station is equal or less than 1 ms, the base station may transmit a downlink signal (e.g., a signal including discovery signal transmission but not a PDSCH) through an unlicensed band immediately after a channel is sensed to be idle during at least a sensing interval $T_{drs}$ = 25 $\mu$s. Here, $T_{drs}$ consists of one slot interval $T_{sl}$ = 9 $\mu$s and an immediate following interval $T_f$ (=16 $\mu$s).

(3) Third downlink CAP method

Abase station may perform the following CAP for downlink signal transmission through multiple carriers in an unlicensed band.

1) Type A: a base station performs a CAP for multiple carriers based on a counter N defined according to each carrier (counter N considered in the CAP) and performs downlink signal transmission based on the CAP.

- Type A1: the counter N of each carrier is independently determined, and downlink signal transmission through each carrier is performed based on the counter N of each carrier.
- Type A2: the counter N of each carrier is determined as an N value for a carrier with a largest contention window size, and downlink signal transmission through each carrier is performed based on the counter N of the carrier.

2) Type B: a base station performs a CAP based on the counter N only for a specific carrier among a plurality of carriers and performs downlink signal transmission by determining for remaining carriers whether or not a channel is idle, prior to signal transmission in the specific carrier.

- Type B1: a single contention window size is defined for a plurality of carriers, and a base station uses the single contention window size when performing a CAP based on the counter N for a specific carrier.
- Type B2: a contention window size is defined for each carrier, and a largest contention window size of contention window sizes is used to determine a value of $N_{init}$ for a specific carrier.

Uplink signal transmission method through unlicensed band

A terminal performs a contention-based CAP for uplink signal transmission in an unlicensed band. The terminal performs a Type 1 or Type 2 CAP for uplink signal transmission in an unlicensed band. Generally, the terminal may perform a CAP configured by a base station (e.g., Type 1 or Type 2) for uplink signal transmission.

(1) Type 1 uplink CAP method

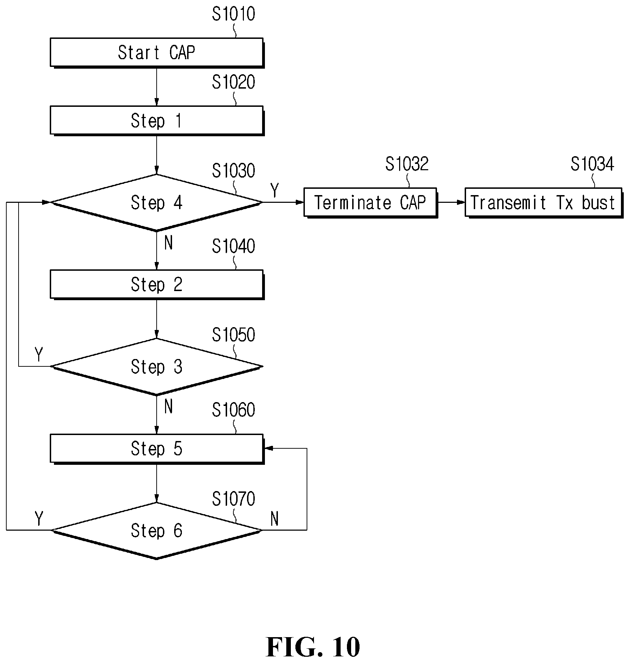

FIG. 10 illustrates a flowchart of a Type 1 CAP operation of a terminal for uplink signal transmission. The terminal may start a channel access procedure (CAP) for signal transmission through an unlicensed band (S1010). The terminal may randomly select a backoff counter N within a contention window (CW) according to Step 1. Herein, the value of N is set to an initial value $N_{init}$ (S1020). $N_{init}$ is selected as an arbitrary value between 0 and $CW_p$. Next, according to Step 4, if the backoff counter value N is 0 (Y of S1030), the terminal terminates the CAP (S1032). Next, the terminal may perform Tx burst transmission including a PDSCH/PDCCH (S1034). On the other hand, if the backoff counter value is not 0 (N of S1030), the terminal decreases the backoff counter value by 1 according to Step 2 (S1040). Next, the terminal checks whether or not a channel of U-cell(s) is idle (S1050), and if it is idle (Y of S1050), the terminal checks whether or not the backoff counter value is 0 (S1030). On the other hand, at step S1050, if the channel is not idle, that is, if the channel is busy (N of S1050), the terminal checks whether or not the channel is idle for a defer duration $T_d$ (longer than 25 usec) longer than a slot time (e.g., 9 usec) (S1060). If the channel is idle for the defer duration (Y of S1070), the terminal may restart the CAP. Herein, the defer duration may consist of a 16 usec interval and immediate subsequent $m_p$ successive slot times (e.g., 9 usec). On the other hand, if the channel is busy for the defer duration (N of S1070), the terminal performs step S1060 again and checks again whether or not the channel is idle for a new defer duration.

Table 6 exemplifies variations of $m_p$, minimum CW, maximum CW, maximum channel occupancy time (MCOT) and allowed CW sizes, which are applied to a CAP, according to channel access priority classes.

[Table 6]

| Channel Access Priority Class ($p$) | $m_p$ | $CW_{min,p}$ | $CW_{max,p}$ | $T_{ulm\,cot,p}$ | allowed $CW_p$ sizes |
|---|---|---|---|---|---|
| 1 | 2 | 3 | 7 | 2 ms | {3,7} |
| 2 | 2 | 7 | 15 | 4 ms | {7,15} |
| 3 | 3 | 15 | 1023 | 6ms or 10 ms | {15,31,63,127, 255,511,1023} |
| 4 | 7 | 15 | 1023 | 6ms or 10 ms | {15,31,63,127, 255,511,1023} |

NOTE1: For $p$=3, 4, $T_{ulm\,cot,p}$ =10ms if the higher layer parameter *'absenceOfAnyOtherTechnology-r14'* indicates TRUE, otherwise, $T_{ulm\,cot,p}$=6ms.
NOTE 2: When $T_{ulm\,cot,p}$=6ms it may be increased to 8 ms by inserting one or more gaps. The minimum duration of a gap shall be 100 $\mu$s. The maximum duration before including any such gap shall be 6 ms.

A contention window size applied to a Type 1 uplink CAP may be determined based on various methods. For example, the contention window size may be adjusted based on whether a new data indicator (NDI) value is toggled for at least one HARQ process related to HARQ_ID_ref that is an HARQ process ID of a UL-SCH within a predetermined time interval (e.g., reference TU). In case a terminal performs signal transmission by using a Type 1 channel access procedure related to a channel access priority class p in a carrier, if an NDI value for at least one HARQ process related to HARQ_ID_ref is toggled, the terminal sets $CW_p$=$CW_{min,p}$ for every priority class p∈{1,2,3,4}, and otherwise, the terminal increases $CW_p$ for every priority class p∈{1,2,3,4} to a next higher allowed value.

A reference time interval/occasion $n_{ref}$ (or reference slot $n_{ref}$) is determined as follows.

In case a terminal receives a UL grant in a time interval/occasion (or slot) $n_g$ and performs a transmission including UL-SCH starting from a time interval/occasion (or slot) $n_0$ within time intervals/occasions (or slots) $n_0, n_1, ..., n_w$ and without gaps (here, a time interval/occasion (or slot) $n_w$ is a latest time interval/occasion (or slot) preceding a time interval/occasion (or slot) $n_g$-3 in which the terminal transmits a UL-SCH based on a Type 1 CAP), a reference time interval/occasion (or slot) $n_{ref}$ is the time interval/occasion (or slot) $n_0$.

(2) Type 2 uplink CAP method

In case a terminal uses a Type 2 CAP for uplink signal (e.g., signal including PUSCH) transmission through an unlicensed band, the terminal may transmit an uplink signal (e.g., signal including PUSCH) through the unlicensed band immediately after sensing that a channel is idle at least during a sensing interval $T_{short\_ul} = 25\ \mu s$. $T_{short\_ul}$ consists of one slot interval $T_{sl} = 9\ \mu s$ and an immediate following interval $T_f (=16\ \mu s)$. $T_f$ includes an idle slot interval $T_{sl}$ at a start point of $T_f$.

<u>Downlink channel structure</u>

A base station transmits a relevant signal to a terminal through a downlink channel described below, and the terminal receives the relevant signal from the base station through the downlink channel described below.

(1) Physical downlink shared channel (PDSCH)

A PDSCH carries downlink data (e.g., DL-shared channel transport block (DL-SCH TB)) and applies modulation methods such as QPSK(Quadrature Phase Shift Keying), 16 QAM(Quadrature Amplitude Modulation), 64 QAM, and 256 QAM. A codeword is generated by encoding a TB. A PDSCH may carry a maximum of 2 codewords. Scrambling and modulation mapping are performed for each codeword, and modulation symbols generated from each codeword are mapped to one or more layers (layer mapping). Each layer is mapped to a resource together with a demodulation reference signal (DMRS) to be generated as an OFDM symbol signal and is transmitted through a corresponding antenna port.

(2) Physical downlink control channel (PDCCH)

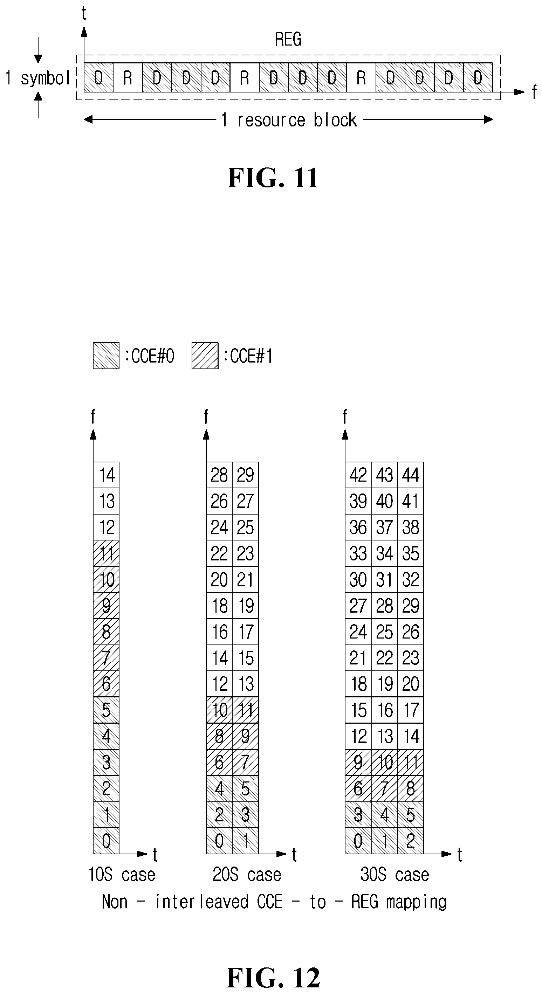

APDCCH carries downlink control information (DCI) and applies a QPSK modulation method. One PDCCH consists of 1, 2, 4, 8 or 16 control channel elements (CCEs) according to an aggregation level (AL). One CCE consists of 6 resource element groups (REGs). One REG is defined by one OFDM symbol and one (P)RB. FIG. 11 illustrates an example of a single REG structure. In FIG. 11, D represents a resource element to which DCI is mapped, and R represents a RE to which DMRS is mapped. DMRS is a frequency domain direction within one symbol and is mapped to 1st, 5th and 9th REs.

A PDCCH is transmitted through a control resource set (CORESET). A CORESET is defined as a REG set with a given numerology (e.g., SCS, CP length, etc.). A plurality of OCRESETs for one terminal may overlap with each other in time/frequency domain. A CORESET may be configured through system information (e.g., MIB) or terminal-specific (UE-specific) higher layer (e.g., radio resource control (RRC)) signaling. Specifically, a number of RBs and a number (up to 3) of symbols constituting a CORESET may be configured by higher layer signaling.

For each CORESET, precoder granularity in frequency domain is configured by higher layer signaling to be one of the following:

- *sameAsREG-bundle*: to be same as a REG-bundle size in frequency domain
- *allContiguousRBs*: to be same as a number of continuous RBs in frequency domain in CORESET

REGs in a CORESET are numbered based on a time-first mapping manner. That is, REGs are sequentially numbered starting from 0, beginning with a first OFDM symbol in the lowest-numbered resource block in the CORESET.

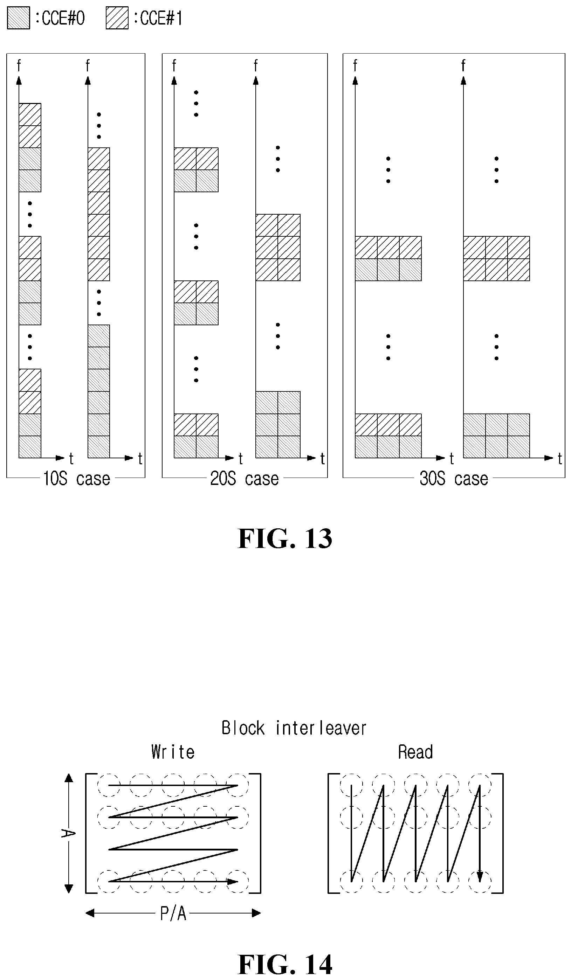

A CCE-to-REG mapping type is configured as one of a non-interleaved CCE-REG mapping type or an interleaved CCE-REG mapping type. FIG. 12 illustrates an example of a non-interleaved CCE-REG mapping type, and FIG. 13 illustrates an example of an interleaved CCE-REG mapping type.

- Non-interleaved CCE-REG mapping type (or localized mapping type): 6 REGs for a given CCE constitute one REG bundle, and all REGs for the given CCE are continuous. One REG bundle corresponds to one CCE.
- Interleaved CCE-REG mapping type (or distributed mapping type): 2, 3 or 6 REGs for a given CCE constitute one REG bundle, and the REG bundle is interleaved in a CORESET. A REG bundle in a CORESET consisting of 1 OFDM symbol or 2 OFDM symbols consists of 2 or 6 REGs, and a REG bundle in a CORESET consisting of 3 OFDM symbols consists of 3 or 6 REGs. A size of a REG bundle is configured according to each CORESET.

FIG. 14 illustrates an example of a block interleaver. A number (A) of rows of a (block) interleaver for the above interleaving operation is set to one of 2, 3 and 6. In case a number of interleaving units for a given CORESET is P, a number of columns of a block interleaver is equal to P/A. As shown in FIG. 14 below, a writing operation for a block interleaver is performed in a row-first direction, and a reading operation is performed in a column-first direction. A cyclic shift (CS) of an interleaving unit is applied based on an id that is configurable independently of an ID configurable for DMRS.

A terminal performs decoding (namely, blind decoding) for a set of PDCCH candidates to obtain DCI transmitted through a PDCCH. The set of PDCCH candidates decoded by the terminal is defined as a PDCCH search space. A search space set may be a common search space or a UE-specific search space. The terminal may obtain DCI by monitoring PDCCH candidates in one or more search space sets configured by an MIB or higher layer signaling. Each CORESET configuration is associated with one or more search space sets, and each search space set is associated with one CORESET configuration. One search space set is determined based on the following parameters.

- *controlResourceSetId*: indicates a control resource set related to a search space set.

- *monitoringSlotPeriodicityAndOffset*: indicates a PDCCH monitoring periodicity slot (slot unit) and a PDCCH monitoring slot offset (slot unit).

- *monitoringSymbolsWithinSlot*: indicates a PDCCH monitoring pattern within a slot for PDCCH monitoring (e.g., first symbol(s) of a control resource set).

- *nrofCandidates*: indicates a number of PDCCH candidates (one of 0, 1, 2, 3, 4, 5, 6 and 8) for AL={1, 2, 4, 8, 16} respectively.

Table 7 exemplifies a feature according to each search space type.

[Table 7]

| Type | Search Space | RNTI | Use Case |
|------|------|------|------|
| Type0-PDCCH | Common | SI-RNTI on a primary cell | SIB Decoding |
| | | | |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| | UE Specific | C-RNTI, or MCS-C-RNTI, or CS-RNTI(s) | User specific PDSCH decoding |

Table 8 exemplifies DCI formats that are transmitted through a PDCCH.

[Table 8]

| 0_0 | Scheduling of PUSCH in one cell |
|------|------|
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 is used to deliver dynamic slot format information (e.g., dynamic SFI) to a terminal, and DCI format 2_1 is used to deliver downlink pre-Emption information to a terminal. DCI format 2_0 and/or DCI format 2_1 may be delivered to terminals within a single group through a group common PDCCH that is a PDCCH delivered to terminals defined as the group.

Uplink channel structure

A terminal transmits a relevant signal to a base station through an uplink channel described below, and the base station receives the relevant signal from the terminal through the uplink channel described below.

(1) Physical uplink shared channel (PUSCH)

A PUSCH carries uplink data (e.g., UL-shared channel transport block (UL-SCH TB) and/or uplink control information (UCI) and is transmitted based on a cyclic prefix-orthogonal frequency division multiplexing (CP-OFDM) waveform or a discrete Fourier transformspread-orthogonal frequency division multiplexing (DFT-s-OFDM) waveform. In case the PUSCH is transmitted based on the DFT-s-OFDM waveform, a terminal transmits the PUSCH by applying transform precoding. As an example, if transform precoding is impossible (e.g., transform precoding is disabled), the terminal may transmit the PUSCH based on the CP-OFDM waveform, and if transform precoding is possible (e.g., transform precoding is enabled), the terminal may transform the PUSCH based on the CP-OFDM waveform or the DFT-s-OFDM waveform. PUSCH transmission may be dynamically scheduled by an UL grant within DCI or semi-statically scheduled (configured grant) based on higher layer (e.g., RRC) signaling (and/or Layer 1 (L1) signaling (e.g., PDCCH)). PUSCH transmission may be performed based on a codebook or based on non-codebook.

(2) Physical uplink control channel (PUCCH)

PUCCHs carry uplink control information, HARQ-ACK and/or a scheduling request (SR) and are classified into short PUCCHs and long PUCCHs according to PUCCH transmission lengths. Table 9 exemplifies PUCCH formats.

[Table 9]

| PUCCH format | Length in OFDM symbols $N_{symb}^{PUCCH}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 carries UCI with a maximum size of 2 bits and is transmitted by being mapped based on a sequence. Specifically, a terminal transmits specific UCI to a base station by transmitting one sequence of a plurality of sequences through a PUCCH that is PUCCH format 0. Only when transmitting a positive SR, the terminal transmits a PUCCH, which is PUCCH format 0, within a PUCCH resource for a corresponding SR configuration.

PUCCH format 1 carries UCI with a maximum size of 2 bits, and a modulation symbol is spread by an orthogonal cover code (OCC) (which is differently configured according to whether frequency hoping occurs) in time domain. A DMRS is transmitted in a symbol where the modulation symbol is not transmitted (that is, it is transmitted by being time-division multiplexed (TDM)).

PUCCH format 2 carries UCI with a bit size greater than 2 bits, and a modulation symbol is transmitted by being frequency division multiplexed (FDM) with a DMRS. A DM-RS is located with a density of 1/3 in symbol indexes #1, #4, #7 and 10 within a given resource block. A pseudo noise (PN) sequence is used for a DM_RS sequence. Frequency hopping may be activated for 2-symbols PUCCH format 2.

PUCCH format 3 does not enable terminal multiplexing within same physical resource blocks and carries UCI with a bit size greater than 2 bits. In other words, a PUCCH resource of PUCCH format 3 does not include any orthogonal cover code. A modulation symbol is transmitted by being time division multiplexed with a DMRS.

Network access and communication process

A terminal may perform a network access process. For example, while performing access to a network (e.g., base station), the terminal may receive system information and configuration information, which are necessary to perform a procedure and/or methods described/proposed below, and store the information in a memory. Configuration information necessary for the present disclosure may be received through higher layer (e.g., RRC layer, medium access control (MAC) layer, etc.) signaling.

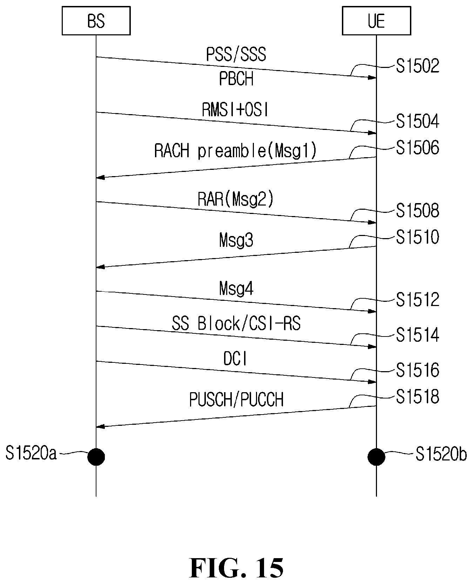

FIG. 15 illustrates an example of a network initial access and communication procedure that is applicable to the present disclosure. In NR, a physical channel and a reference signal may be transmitted by using beamforming. In case beamforming-based signal transmission is supported, there may be a beam management process for aligning a beam between a base station and a terminal. In addition, a signal proposed in the present disclosure may be transmitted/received by using beamforming. In a radio resource control (RRC) IDLE mode, beam alignment may be performed based on an SSB. On the other hand, in a RRC-CONNECTED mode, beam alignment may be performed based on CSI-RS (in DL) and SRS (in UL). Meanwhile, in case beamforming-based signal transmission is not supported, a beamrelated operation may be skipped in the description below.

Referring to FIG. 15, a base station (e.g., BS) may periodically transmit an SSB (S1502). Herein, the SSB includes PSS/SSS/PBCH. The SSB may be transmitted by using beam sweeping (refer to FIG. 14). Next, the base station may transmit remaining minimum system information (RMSI) and other system information (OSI) (S1504). RMSI may include information that is necessary for the terminal to have an initial access to the base station (e.g., PRACH configuration information). Meanwhile, after performing SSB detection, the terminal identifies a best SSB. Next, the terminal may transmit a RACH preamble (message 1 (Msg1)) to the base station by using a PRACH resource linked/corresponding to an index (that is, beam) of the best SSB (S1506). A beam direction of the RACH preamble is associated with the PRACH resource. Association between the PRACH resource (and/or the RACH preamble) and the SSB (index) may be configured through system information (e.g., RMSI). Next, as a part of a RACH process, the base station may transmit a random access response (Msg2) as a response to the RACH preamble (S1508), and the terminal may transmit Msg3 (e.g., RRC connection request) by using a UL grant in the RAR (S1510), and the base station may transmit a contention resolution message (Msg4) (S1812). Msg4 may include a RRC connection setup.

When a RRC connection between the base station and the terminal is configured through the RACH process, subsequent beam alignment may be performed based on an SSB/CSI-RS (in DL) and an SRS (in UL). For example, the terminal may receive the SSB/CSI-RS (S1514). The SSB/CSI-RS may be used for the terminal to generate a beam/CSI report. Meanwhile, the base station may request the beam/CSI report to the terminal through DCI (S1516). In this case, the terminal may generate the beam/CSI report based on the SSB/CSI-RS and transmit the generated beam/CSI report to the base station through a PUSCH/PUCCH (S1518). The beam/CSI report may include a beam measurement result, information on a preferred beam, and the like. The base station and the terminal may switch beams based on the beam/CSI report (S1520a and S1520b).

Next, the terminal and the base station may perform a procedure and/or methods described below. For example, based on configuration information obtained from a network access process (e.g., a system information acquisition process, a RRC connection process through RACH, etc.), the terminal and the base station may process information, which is present in a memory as proposed by the present disclosure, and transmit a radio signal or process and store a received radio signal. Herein, the radio signal may include at least one of a PDCCH, a PDSCH and a reference signal (RS) in downlink and at least one of a PUCCH, a PUSCH and an SRS in downlink.

Specific embodiment of the present disclosure

The present disclosure relates to full-duplex (FD)-based communication in an unlicensed band in a wireless communication system, and particularly, to a technology for performing a CAP operation during signal transmission using full-duplex communication. The present disclosure will describe various embodiments about a signal transmission and a CAP operation of a base station. However, the embodiments described below will also be applied to a signal transmission and a CAP operation of a terminal in a same manner or after being a little modified. In the present disclosure, an unlicensed band means a frequency band that is nonexclusively used, and may also be referred to as another term like a shared spectrum or any other terms with an equivalent technical meaning. In addition, access to an unlicensed band may be referred to as shared spectrum channel access.

FD operation for NR

In 5G, new service types are emerging such as extended reality (XR), AI-based services and self-driving cars, and such services have dynamic changes of traffic in both DL and UL directions and require low latency in packet transmission. Traffic loads in 5G services will explode while supporting such new diverse use cases.

On the other hand, an existing semi-static or dynamic TDD UL/DL configuration is constrained by transmission time latency and interference between operators. An existing FDD scheme has a limitation in efficient use of frequency resources in DL/UL directions. Accordingly, introduction of a full duplex (FD) operation in a single carrier is under discussion to lower latency time and efficiently use resources in NR.

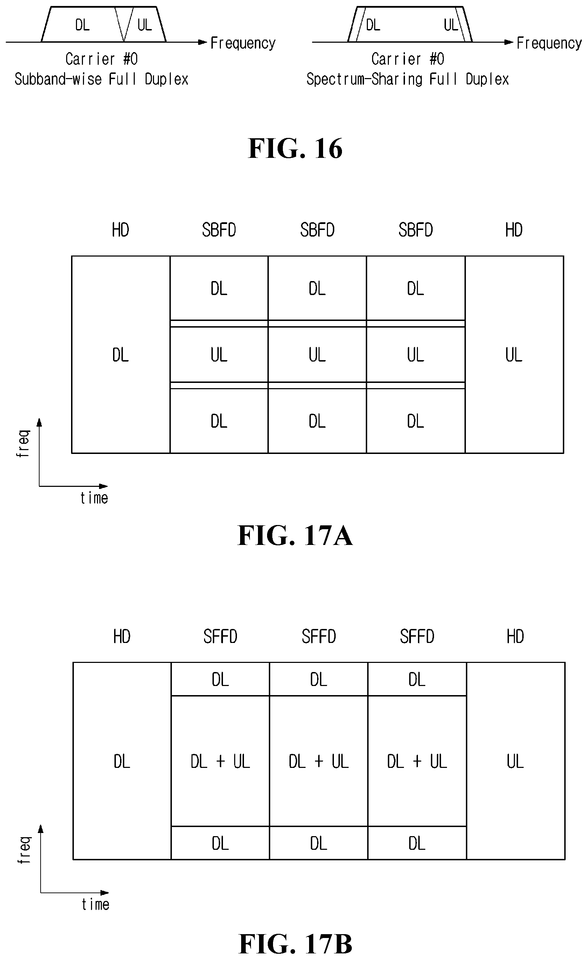

For an example of applying intra-carrier FD, subband-wise full-duplex (SB-FD) and spectrum-sharing full-duplex (SS-FD) may be considered as shown in FIG. 16. FIG. 16 illustrates an example of full-duplex communication between carriers that is applicable to the present disclosure. In SB-FD, transmissions of DL and UL are performed in different frequency resources within a same carrier. That is, for a same time resource, DL and UL occupy different frequency resources. In SS-FD, transmissions of DL and UL are performed in a same frequency resource or overlapped frequency resources within a same carrier. That is, for a same time resource, DL and UL may occupy a same frequency resource or overlapped frequency resources.

Such FD operation may be used in combination with an existing half-duplex (HD) operation. For example, in an HD-based TDD operation, only some time resources may be used to an FD operation. In a time resource for performing the FD operation, an SB-FD or SS-FD operation may be performed.

FIG. 17A and FIG. 17B illustrate an example of coexistence of a time resource with half-duplex (HD) operation and a time resource with FD operation, which is applicable to the present disclosure. In FIG. 17A, some time resources are operated as SB-FD, and the remaining time resources are operated as HD. In FIG. 17B, some time resources are operated as SS-FD, and the remaining time resources are operated as HD. Herein, for example, a unit of a time resource may be a slot or a symbol.

In a time resource operated as SB-FD, some frequency resources are used as DL resource, and some frequency resources are used as UL resource. Between DL and UL frequency resources, there may be a guard band, a guard frequency resource or a guard subcarrier that is used as neither DL nor UL but is emptied. In a time resource operated as SB-FD all frequency resources may be used both for DL and for UL. Alternatively, in order to reduce an impact of interference from another adjacent carrier (e.g., adjacent carrier interference (ACI)), some frequence resources at one end or both ends of a carrier may not be used for DL and/or UL. That is, the one end or both ends of a carrier may be used as a guard band that is used neither for DL and for UL. Alternatively, in order to reduce ACI affecting UL reception, one end or both ends of a carrier may be used only for DL transmission.

In the present disclosure, a slot resource operated as HD is referred to as HD-slot, and a slot resource operated as SB-FD and a slot resource operated as SS-FD are referred to as SB-FD slot and SS-FD slot respectively. In addition, the SS-FD slot and the SS-FD slot may be collectively referred to as FD slot. In the present disclosure, of all frequency resources in a time resource operated as FD, a frequency resource for a DL operation is referred to as DL subband, and a frequency resource for a UL operation is referred to as UL sub-band. As shown in FIG. 17A and FIG. 17B, frequency resources operating as DL and UL are referred to as XL sub-band.

In the case of the above-described FD operation, both a gNB and/or a terminal may perform the FD operation. That is, both the gNB and the terminal may perform a DL and UL operation simultaneously by using a same frequency resource or different frequency resources in a same time resource. As another example, the gNB alone may perform the FD operation, and the terminal may perform HD. The gNB may perform DL transmission and UL reception simultaneously by using a same frequency resource or different frequency resources in a same time resource, but the terminal may perform only DL reception or UL transmission in a specific time resource. In this case, the gNB may perform the FD operation by performing DL transmission and UL reception with different terminals at a same time.

The description below shows an example in which a gNB performs an FD operation, while a terminal performs an HD operation. However, various embodiments of the present disclosure may be applied to a case in which both a gNB and a terminal perform an FD operation, or a case in which a gNB performs an HD operation and a terminal performs an FD operation.

As more and more communication devices require a larger communication capacity, efficient utilization of a limited frequency band becomes a more important requirement for a future wireless communication system. Cellular communication systems like LTE/NR system are also considering a traffic offloading method using the unlicensed band of 2.4 GHz, which is mainly used for the existing WiFi system or newly highlighted unlicensed bands like 5/6 GHz and 60 GHz.

Basically, as an unlicensed band assumes that wireless transmission and reception are performed through contention between each communication node, it requires that each communication node performs channel sensing before transmitting a signal and signal transmission is not performed by any other communication nodes. Such a post-sensing transmission operation is referred to as LBT (listen before talk) or CAP (channel access procedure), and in particular, an operation of checking whether another communication node performs signal transmission is referred to as carrier sensing (CS), and when it is determined that another communication node does not perform signal transmission, clear channel assessment (CCA) has been identified. In the description below, LBT may be replaced by CAP.

An eNB/gNB or UE of an LTE/NR system should perform LBT to transmit a signal in an unlicensed band (hereinafter, referred to as 'U-band'). When the eNB/gNB or UE of the LTE/NR system transmits a signal, other communication nodes like wireless gigabit alliance (WiGig) of Wi-Fi or 802.11ad/ay should perform LBT to prevent interference. For example, a Wi-Fi standard (e.g., 802.11ac) specifies -62 dBm and -82 dBm as a CCA threshold for a non-Wi-Fi signal and a Wi-Fi signal respectively. According to these limits, an STA or AP does not transmit a signal not to cause interference, for example, when a non-Wi-Fi signal is received at a power above -62 dBm.

The present disclosure proposes a CAP of a base station and/or a terminal capable of operating in FD mode in an unlicensed band. While a base station/terminal capable of operating in FD mode is performing transmission in a specific band, the base station/terminal may perform a CAP through reception in a band adjacent to the specific band and begin transmission after succeeding in the CAP, and thus a radio resource may be efficiently used.

In the NR standard, a basic unit for performing a CAP may correspond to an approximate 20 MHz bandwidth, and the 20 MHz bandwidth is defined as channel in TS 37.213 or as RB set in TS 38.214. The present disclosure may describe the channel or RB set as LBT BW, both of which may be understood as have a same meaning.

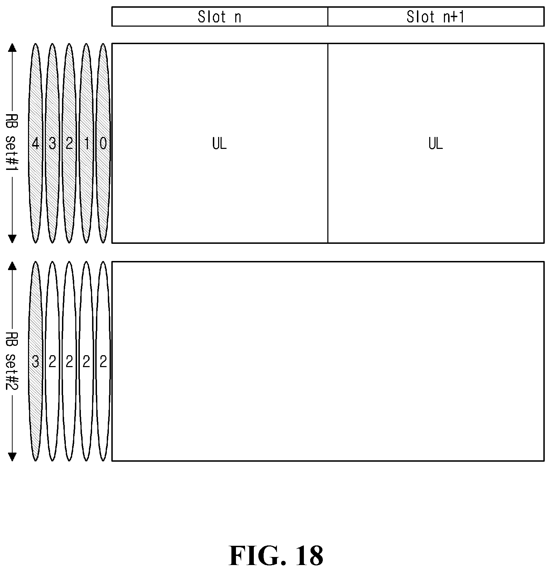

FIG. 18 illustrates an example of a CAP operation for communication in an unlicensed band that is applicable to the present disclosure. In case of a CAP operation of a base station incapable of an FD operation, as exemplified in FIG. 18, when a multi-channel CAP is performed for a RB set#1 and a RB set#2, if the CAP is successful only for the RB set#1 (e.g., if a backoff counter value becomes 0 immediately before a slot n transmission) and the CAP fails in the RB set#2 (e.g., if the backoff counter value does not reach 0 because a channel is busy immediately before the slot n transmission), the base station may perform DL transmission in the RB set#1.

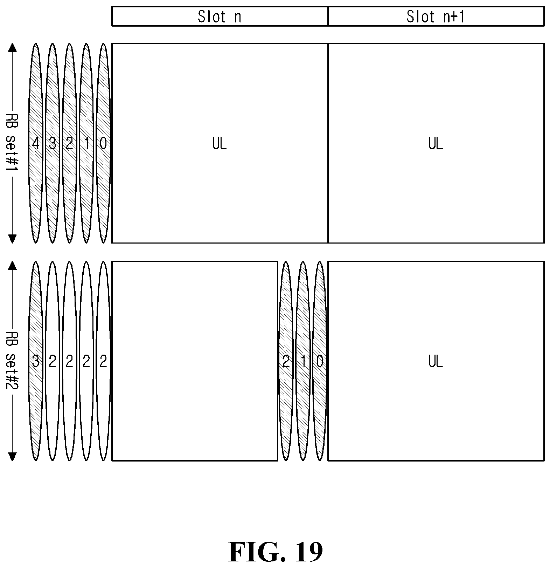

On the other hand, a CAP operation of a base station capable of an FD operation is as follows. FIG. 19 illustrates another example of a CAP operation for communication in an unlicensed band that is applicable to the present disclosure. As exemplified in FIG. 19, a base station may keep performing a CAP through signal reception in the RB set#2, while transmitting a signal in the RB set#1. Specifically, if a backoff counter value corresponding to the RB set#2 immediately before slot n transmission is 2, the base station may perform a CAP for the RB set#2 at the same time as transmission in the RB set#1 in a slot n. In addition, if the back off counter value corresponding to the RB set#2 immediately before slot n+1 transmission reaches 0 because the channel is idle, the base station may also start signal transmission in the RB set#2.

The present disclosure proposes various embodiments related to a relationship between a RB set and a sub-band of SB-FD or SS-FD (e.g., DL/UL/XL sub-band), a method of determining an energy detection (ED) threshold, a method of determining COT starting/ending, and a multi-channel CAP method.

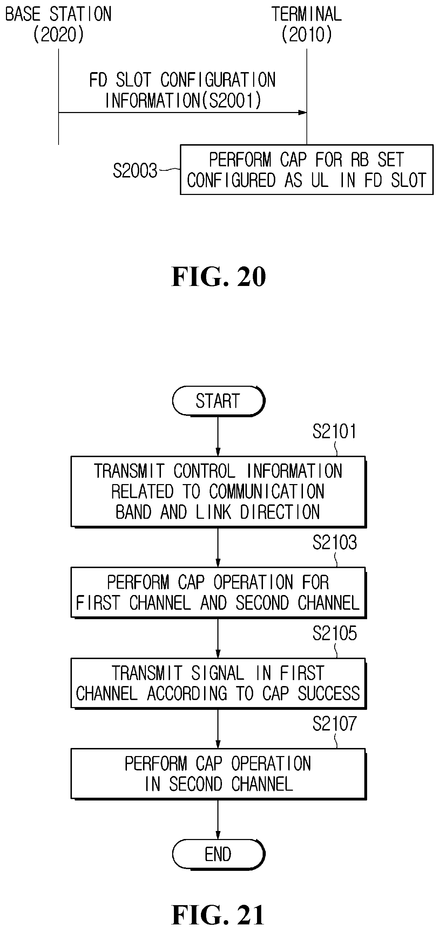

FIG. 20 illustrates an example of a procedure of applying an FD operation to an unlicensed band in a wireless communication system according to an embodiment of the present disclosure. FIG. 20 exemplifies signal exchange between a terminal 2010 and a base station 2020. The terminal 2010 of FIG. 20 has FD-capability and may receive configuration information on at least one slot for an FD operation from the base station 2020 through a procedure as shown in FIG. 20.

Referring to FIG. 20, at step S2001, the base station 2020 transmits FD slot configuration information to the terminal 2010. The FD slot configuration information may indicate at least one of a time of a slot supporting an SB-FD operation, a frequency axis location and size, and a link direction (e.g., DL, UL, DL+UL). According to an embodiment, for RB sets belonging to one BWP, the base station 2020 may configure DL/UL of each RB set by using the configuration information. Specifically, the base station 2020 may configure/indicate link information like DL, UL or DL+UL for each RB set.

At step S2003, the terminal 2010 performs a CAP for a RB set configured as UL or DL+UL. Although not illustrated in FIG. 20, when the CAP is completed, the terminal 2010 may perform UL transmission through a corresponding RB set. FIG. 20 shows only the CAP operation of the terminal 2010, but according to another embodiment, the base station 2020 may also perform a CAP operation for DL transmission.

FIG. 21 illustrates an example of a procedure of transmitting a signal by using an unlicensed band in a wireless communication system according to an embodiment of the present disclosure. FIG. 21 exemplifies a method for operating a terminal.

Referring to FIG. 21, at step S2101, a terminal transmits control information related to a communication band and a link direction. Herein, the control information includes at least one of system information, configuration information of a higher layer, and control information of a physical layer. Specifically, the terminal may transmit system information including information related to a communication band, transmit configuration information related to distinguishing a UL resource and a DL resource within the communication band, or transmit information indicating a link direction(s) applied within a specific time interval (e.g., slot). For example, control information may include information related to a link direction for channels belonging to an unlicensed band. In this case, according to an embodiment, the control information may indicate the information related to the link direction according to each channel or each channel group, and for example, whether an FD operation is allowed may be indicated according to each channel or each channel group. Herein, a channel is a unit of frequency axis where a CAP operation or an LBT operation is performed, and may also be referred to as RB set.

At step S2103, the terminal performs a CAP operation for a first channel and a second channel. For example, the terminal may perform the CAP operation based on the control information received at step S2101. The control information includes information on a link direction of a plurality of channels including the first channel and the second channel and indicates a link direction of each of the first channel and the second channel as DL or DL+UL. Accordingly, the terminal determines the first channel and the second channel as candidate channels for performing DL transmission and performs the CAP operation. Herein, as the first channel and the second channel are unit resources for different CAP operations, the terminal performs a CAP operation independently in each of the first channel and the second channel. In other words, the terminal may determine a backoff counter value for the first channel and the second channel and determine availability of a channel (e.g., whether it is busy/idle).

At step S2105, the terminal transmits a signal in the first channel according to CAP success. In other words, the terminal performs the CAP operation for the first channel and determines the CAP success when determining that the channel is idle. Accordingly, the terminal may occupy the first channel during a predetermined time interval and transmit a signal. Herein, in an embodiment of FIG. 21, a CAP for the second channel fails. That is, the terminal determines CAP success only for the first channel and determines that the second channel is busy by being occupied by another device. Thus, the terminal does not perform DL transmission in the second channel.

At step S2107, the terminal performs a CAP operation in the second channel. In other words, while transmitting the signal in the first channel, the terminal may receive a signal in the second channel and keep performing the CAP operation by using the received signal. As the terminal supports the FD operation and a band including the first channel and the second channel is configured to allow the FD operation, the terminal may transmit a signal in the first channel and receive a signal in the second channel.

[Embodiment#1] In a certain FD slot, a DL or UL or XL sub-band may be determined based on RB set unit granularity. That is, a DL or UL or XL sub-band in a certain FD slot may be configured as a single RB set or a plurality of RB sets.

For a certain slot or all or some OFDDM symbols within the slot, a base station may notify whether a link direction applied to a portion of a frequency resource belonging to a bandwidth of a carrier/BWP is DL or UL or DL+UL (e.g., SS-FD) through higher layer signaling (e.g., cell-specific or group-common or UE-specific RRC signaling) and/or L1 signaling (e.g., UE-specific DCI or UE group-common DCI). Herein, a minimum unit of a resource indicated by corresponding signaling may be a RB set, and a region of DL or UL or DL+UL belonging to a bandwidth may be signaled in a RB set. For example, for a BWP consisting of 4 RB sets, RB set#1 and RB set#2 may be signaled as DL sub-bands, and RB set#3 and RB set#4 may be signaled as UL sub-bands.

According to the above-described embodiments, control information related to a communication band and a link direction may be transmitted, and communication in an unlicensed band may be performed based on the control information. Herein, the control information may be understood as being directed to configuring an FD slot. The FD slot may include at least one sub-band. Herein, according to various embodiments, for a sub-band within the FD slot, a length value in a RB set unit, that is, how many RB set(s) are included may be set as a bandwidth. For example, if a size of a sub-band within the FD slot is indicated to be k, this indicates that the sub-band includes k RB sets. Alternatively, a sub-band within the FD slot may be configured by using a bitmap for RB sets. Each bit in the bitmap corresponds to one RB set, and a RB set corresponding to bits set to a positive value (e.g., 1) in the bitmap represents RB set(s) in a corresponding sub-band. Alternatively, a constraints may be added to the effect that only continuous RB sets of k RB sets may be configured as a UL and/or DL subband. In consideration of this, among k RB sets, one start RB set index and the number of RB sets beginning with a start RB set may be set/indicated. Specifically, a corresponding combination (of a start RB set index and the number of RB sets) may be indexed, and one of indexes may be set/indicated in a similar way to a resource indication value (RIV) method of frequency domain resource allocation (FDRA) type 1.

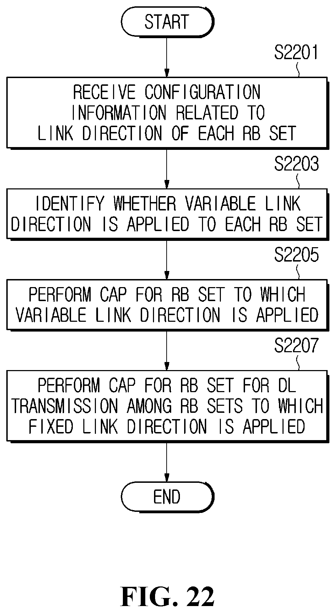

According to an embodiment, DL or UL or DL+UL of each RB set may be determined according to a CAP result of a base station and/or a terminal. For example, for a BWP including 4 RB sets, when the base station succeeds in a CAP and occupies a channel of RB set#1 and RB set#2, RB set#1 and RB set#2 may be a DL sub-band. In addition, when the terminal succeeds in a CAP and occupies a channel of RB set#3 and RB set#4, RB set#3 and RB set#4 may be a UL sub-band. According to a CAP result of each RB set, each RB set group or each BWP/carrier, whether DL or UL or DL+UL can be determined may be separately signaled. For example, for a specific RB set in which an indication is signaled to the effect "DL or UL or DL+UL may be determined according to a CAP result", DL or UL or DL+UL of the RB set may be different depending on whether a node succeeding in a CAP is a base station and/or a terminal. On the other hand, for a specific RB set in which an indication is signaled to the effect "DL or UL or DL+UL may not be determined according to a CAP result", DL or UL or DL+UL of the RB set may be determined/defined/configured/indicated in advance, and a terminal (e.g., in the case of UL or DL+UL) or a base station (e.g., in the case of DL or DL+UL) may occupy a channel after a CAP accordingly. Thus, determination of a link direction for each RB set may be performed as shown in FIG. 22 below.

FIG. 22 illustrates an example of a procedure of determining a link direction of a channel in an unlicensed band in a wireless communication system according to an embodiment of the present disclosure. FIG. 22 exemplifies a method for operating a terminal.

Referring to FIG. 22, at step S2201, a terminal receives configuration information related to a link direction of each RB set. The configuration information related to a link direction of each RB set may be received as a portion of configuration information related to an FD slot or as separate control information. According to various embodiments, the configuration information related to a link direction of each RB set may indicate whether a link direction applied to each RB set is dependent on a CAP result, in other words, whether the link direction is variable according to the CAP result. For example, the configuration information related to a link direction of each RB set may indicate whether the link direction may be determined as DL or UL or DL+UL according to a CAP result.

At step S2203, the terminal identifies whether a variable link direction is applied to each RB set. Based on the configuration information received at step S2201, the terminal may identify whether the variable link direction is applied to each RB set. However, according to other embodiments, whether the variable link direction is applied may be indicated and identified not only in a RB set unit but also in a RB set group unit or a BWP unit.

At step S2205, the terminal performs a CAP for a RB set to which a variable link direction is applied. That is, if a variable link direction is applied, a link direction applied to a corresponding RB set is not fixed, and thus the terminal may perform a CAP for the RB set. In addition, although not illustrated in FIG. 22, when successfully occupying a channel through the CAP, the terminal may perform DL transmission in the RB set.

At step S2207, the terminal performs a CAP for a RB set for UL transmission among RB sets to which a fixed link direction is applied. Herein, the RB set for UL transmission includes a RB set for which a link direction is set to UL or DL+UL. In the case of a RB set for DL transmission, UL transmission is not allowed, and thus the terminal need not perform a CAP for the RB set and performs a CAP for remaining RB set(s). In addition, although not illustrated in FIG. 22, when successfully occupying a channel through the CAP, the terminal may perform UL transmission in a RB set for the UL transmission.

As shown in Table 10 below, an intra-cell guard band may be configured between adjacent RB sets. A size of an intra-cell guard band is expressed by the number of RBs, and a value expressing the number of RBs equal to or greater than 0 may be set as the size of the intra-cell guard band. In order to support an SB-FD or SS-FD operation in an FD slot, a guard band for adjusting an amount of self-interference may be needed between adjacent sub-bands. Herein, only when an intra-cell guard band greater than a predetermined size (e.g., X RB(s)) is configured, an SB-FD or SS-FD operation may be allowed for a corresponding BWP/carrier. X may be defined in advance (e.g., X=0), or a default value of X may be predefined in specifications. Alternatively, a value of X may also be set by higher layer signaling. In this case, a terminal may identify a size of a guard band by receiving control information or configuration information related to a size of X from a base station. Furthermore, based on the control information or configuration information related to the size of X, the terminal may determine whether to allow an FD operation in two RB sets with the guard band therebetween. In other words, for a BWP/carrier in which the number of RBs equal to or less than X is set as an intra-cell guard band, a specific slot may be constrained to operate only as an HD slot. Table 10 below is an excerpt from TS 38.214 V17.2.0, describing a procedure related to an intra-cell guard band.

[Table 10]

7 UE procedures for transmitting and receiving on a carrier with intra-cell guard bands

For operation with shared spectrum channel access for FR1, when the UE is configured with any of *IntraCell-GuardBandsPerSCS* for UL carrier and for DL carrier with SCS configuration $\mu$, the UE is provided with $N_{\text{RB-set,x}} - 1$ intra-cell guard bands on a carrier with $\mu$, each defined by start CRB and size in number of CRBs, $GB_{s,x}^{\text{start},\mu}$ and $GB_{s,x}^{\text{size},\mu}$, provided by higher layer parameters *startCRB* and *nrofCRBs*, respectively,

where $s \in \{0, 1, ..., N_{\text{RB-set,x}} - 2\}$. The subscript x is set to DL and UL for the downlink and uplink, respectively. Where there is no risk of confusion, the subscript x can be dropped. The intra-cell guard bands separate $N_{\text{RB-set,x}}$ RB sets, each defined by start and end CRB, $RB_{s,x}^{\text{start},\mu}$ and $RB_{s,x}^{\text{end},\mu}$, respectively. The UE does not expect that *nrofCRBs* is configured with non-zero value smaller than the applicable intra-cell guard bands as specified in [8, TS 38.101-1] corresponding to $\mu$ and carrier size $N_{\text{grid,x}}^{\text{size},\mu}$. The UE determines the start and end CRB indices for s $\in \{0, 1, ..., N_{\text{RB-set,x}} - 1\}$ as

$$RB_{s,x}^{\text{start},\mu} = N_{\text{grid,x}}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$$

and

(continued)

$$RB_{s,x}^{\text{end},\mu} = N_{\text{grid},x}^{\text{start},\mu} + \begin{cases} N_{\text{grid},x}^{\text{size},\mu} - 1 & s = N_{\text{RB-set},x} - 1 \\ GB_{s,x}^{\text{start},\mu} - 1 & \text{otherwise} \end{cases}$$

The RB set with index s consists of $RB_{s,x}^{\text{size},\mu}$ resource blocks where $RB_{s,x}^{\text{size},\mu} =$

$RB_{s,x}^{\text{end},\mu} - RB_{s,x}^{\text{start},\mu} + 1$ . When the UE is not configured with *IntraCellGuardBandsPerSCS* for $\mu$, the UE determines the CRB indices for the intra-cell guard band(s), if any, and corresponding RB set(s) according to the nominal intra-cell guard band and RB set pattern as specified in [8, TS 38.101-1] corresponding to $\mu$ and carrier size $N_{\text{grid},x}^{\text{size},\mu}$. For either or both DL and UL, if the nominal intra-cell guard band and RB set pattern as specified in [8, TS 38.101-1] contains no intra-cell guard bands, the number of RB sets for the carrier is $N_{\text{RB-set,x}} = 1$.

For a carrier with $\mu$, the UE expects $N_{\text{BWP},i}^{\text{start},\mu} = RB_{s0,x}^{\text{start},\mu}$ and $N_{\text{BWP},i}^{\text{size},\mu} = RB_{s1,x}^{\text{end},\mu} - RB_{s0,x}^{\text{start},\mu} + 1$ where $0 \le s0 \le s1 \le N_{\text{RB-set},x}$ - 1 for a BWP *i* configured by *initialDownlinkBWP* or *BWP-Downlink* for the DL BWP, or *initialUplinkBWP* or *BWP-Uplink* for the UL BWP. Within the BWP *i,* RB sets are numbered in increasing order from 0 to $N_{\text{RB-set},x}^{\text{BWP}} - 1$ where $N_{\text{RB-set},x}^{\text{BWP}}$ is the number of RB sets contained in the BWP *i* and RB set 0 within the BWP *i* corresponds to RB set *s*0 in the carrier and RB set $N_{\text{RB-set},x}^{\text{BWP}} - 1$ within the BWP *i* corresponds to RB set s1 in the carrier.

When a UE is provided with *nrofCRBs* = 0 for all intra-cell guard band(s) on a carrier with $\mu$, the UE is indicated that no intra-cell guard-bands are configured for the carrier and expects $N_{RB\text{-}set,x} > 1$. For $\mu = 0$, the UE expects the number of RBs within a RB set is between 100 and 110. For $\mu = 1$, the UE expects the number of RBs within a RB set is between 50 and 55 except for at most one RB set which may contain 56 RBs.

[Embodiment#2] If an ED threshold or its maximum value applied before a terminal succeeds in a CAP is expressed by TH#1 and while transmission is performed after a CAP is successful for a channel #1, an ED threshold or its maximum value applied during a CAP for another channel #2 is expressed by TH#2, a value of TH#2 may be defined as a relaxed value, that is, a higher value than a value of TH#1 in consideration of self-interference from the channel #1 in which transmission is already underway.

For example, in a situation as shown in FIG. 19 above, when an ED threshold or its maximum size, which a terminal applies when performing a CAP for RB set#1 and RB set#2 before transmission of a slot n, is referred to as TH#1 and an ED threshold or its maximum size, which a terminal applies when performing a CAP for RB set#2 before transmission of a slot n+1, is referred to as TH#2, a size of TH#2 may be greater than a size of TH#1. This is because energy received and/or measured in RB set#2 may increase under the influence of interference leakage or self-interference of a UL signal that the terminal transmits at slot n. For example, when a value of {TH#2-TH#1} is defined as Y (>0 or ≥0), the size of Y may be predefined or set by higher layer signaling. Herein, the value of Y or the value of TH#2 set by a base station or determined by a rule may be different according to UE capability reported by a terminal. The UE capability, on which the value of Y or the value of TH#2 depends, may be the capability of a terminal to remove self-interference. Specifically, as self-interference removal capability is better, CCA may be performed with more self-interference being removed, and thus the value of Y may be set or defined as a lower value.

FIG. 23 illustrates an example of a procedure of adaptively applying an ED threshold in a wireless communication system according to an embodiment of the present disclosure. FIG. 23 exemplifies signal exchange between a terminal 2310 and a base station 2320.

Referring to FIG. 23, at step S2301, the terminal 2310 transmits a report message for informing of being capable of an FD operation to the base station 2320. For example, the terminal 2310 may report that the FD operation is possible to the base station 2320 through UE capability report signaling.

At step S2303, the base station 2320 transmits configuration information related to an ED threshold, which is applied while a CAP is performed during UL transmission, to the terminal 2310. In other words, the base station 2320 may set an ED threshold that is applied when a CAP is performed for another channel, while UL transmission is performed in some channels.

At step S2305, in case the terminal 2310 performs a CAP during UL transmission, the terminal may apply an ED threshold according to the configuration information. For example, the terminal 2310 may perform a CAP for a channel #2, while performing UL transmission in a channel #1, and in this case, may apply a set relaxed ED threshold.

FIG. 24 illustrates an example of a procedure of determining availability of a channel in an unlicensed band in a wireless communication system according to an embodiment of the present disclosure. FIG. 24 exemplifies a method for operating a terminal.

Referring to FIG. 24, at step S2401, a terminal performs measurement to determine channel availability. Specifically, the terminal sets a backoff counter value and measures an energy value of a signal received from the outside of a corresponding RB set to determine whether to reduce the backoff counter value.

At step S2403, the terminal checks whether UL transmission is performed during the measurement. In other words, the terminal checks whether the measurement of step S2401 is performed by using an FD operation, specifically, whether a signal is received from the outside while UL transmission is performed.

If the UL transmission is performed during the measurement, at step S2405, the terminal determines whether a channel is busy/idle by using a first threshold. In other words, when determining whether the channel is occupied by another device based on an energy value that is a result of the measurement of step S2401, the terminal uses the first threshold (e.g., TH#1) as a threshold compared with the measured energy value. Herein, in consideration of the impact of DL transmission, the first threshold may be defined as a greater value than a second threshold used below.

If DL transmission is not performed during the measurement, at step S2407, the terminal determines whether the channel is busy/idle by using the second threshold. In other words, when determining whether the channel is occupied by another device based on an energy value that is a result of the measurement of step S2401, the terminal uses the second threshold (e.g., TH#2) as the threshold compared with the measured energy value.

Herein, a value of Y, which is a difference between the first threshold and the second threshold may be differently set according to how adjacent RB set#1 and RB set #2 are to each other or a transmission power value of the terminal. For example, because the impact of interference may be smaller with a greater spacing between RB sets, a greater value of Y may be applied with a smaller spacing between RB set#1 and RB set #2, and a smaller value of Y may be applied with a greater spacing therebetween. As another example, because an amount of interference affecting a neighbor frequency axis resource may increase along with an increase of power value of a base station, a greater Y value may be applied with a greater power value, and a smaller Y value may be applied with a smaller power value.

[Embodiment#3] In case a terminal capable of performing an FD operation performs a multi-channel CAP, even if the CAP is successful for some channels or RB sets among scheduled or configured UL transmission resources, transmission for the channels or RB sets may be allowed.

In current specifications, in case a terminal holds a UL resource scheduled (e.g., a PUSCH indicated by a UL grant) or configured (e.g., a configured grant (CG)-PUSCH) for a plurality of channels, if any one of the channels is not successful in a CAP, transmission in the UL resource is processed as described in Table 11 below. Table 11 is an excerpt from TS 37.213 v17.2.0, describing CAPs for UL multi-channel transmission.

[Table 11]

| 4.2.1.0.4 Channel access procedures for UL multi-channel transmission(s) |
| --- |
| If a UE<br><br>  - is scheduled to transmit on a set of channels C, and if the UL transmissions are scheduled to start transmissions at the same time on all channels in the set of channels C, or<br><br>  - intends to perform an uplink transmission on configured resources on the set of channels C, and if UL transmissions are configured to start transmissions at the same time on all channels in the set of channels C,<br><br>the following is applicable:<br><br>  - if Type 1 channel access procedure is indicated or intended for the scheduled or configured UL transmissions, respectively, to be transmitted on the set of channels C,<br><br>    - the UE may transmit on channel $c_i \in C$ using Type 2 channel access procedure as described in clause 4.2.1.2,<br><br>      - if the channel frequencies of the set of channels C is a subset of the sets of channel frequencies defined in clause 5.7.4 in [2], and<br><br>      - if Type 2 channel access procedure is performed on channel $c_i$ immediately before the UE transmission on channel $c_j \in C, i \neq j,$ and<br><br>      - if the UE has accessed channel $c_j$ using Type 1 channel access procedure as described in clause 4.2.1.1,<br><br>        - where channel $c_j$ is selected by the UE uniformly randomly from the set of channels C before performing Type 1 channel access procedure on any channel in the set of channels C. |

(continued)

> - the UE may transmit on channel $c_i \in$ C using Type 1 channel access procedure as described in clause 4.2.1.1
> - the UE may not transmit on channel $c_i \in$ C within the bandwidth of a carrier, if the UE fails to access any of the channels, of the carrier bandwidth, on which the
>     UE is scheduled or configured with UL resources.
> - the UE may not transmit on a channel within the bandwidth of a carrier if the
> UE is configured without intra-cell guard band(s) on an UL bandwidth part as described in clause 7 of [8], and the
> UE fails to access any of the channels of the UL bandwidth part.

As described in Table 11, in an existing UL operation, in case a terminal holds a UL resource scheduled (e.g., a PUSCH indicated by a UL grant) or configured (e.g., a configured grant (CG)-PUSCH) for a plurality of channels, if any one of the channels is not successful in a CAP, transmission is not allowed in the entire UL resource. However, for an FD-capable terminal, a rule may be define to allow a UL transmission in even some channels if a CAP is successful for the channels. It is because the terminal is capable of performing an FD operation and even when a transmission begins for some channels, a CAP operation may be performed for other channel(s) at the same time. That is, it is because starting a transmission may be more advantageous after channel(s) succeeding in a CAP are occupied. In this case, as the transmission is initiated for some channel(s), channel access failure may not be reported to a higher layer. Corresponding operations of a terminal are described in FIG. 25 below.

FIG. 25 illustrates an example of a procedure of transmitting a signal according to success of a CAP in a portion of allocated channels in a wireless communication system according to an embodiment of the present disclosure. FIG. 25 exemplifies a method for operating a terminal.

Referring to FIG. 25, at step S2501, a terminal obtains a UL resource including a plurality of channels. The UL resource may be obtained by being dynamically scheduled or allocated in a fixed manner (e.g., configured grant (CG)). In other words, the terminal may receive control information for dynamic scheduling for the UL resource or receive information related to the UL resource that is allocated in a fixed manner.

At step S2503, the terminal succeeds in a CAP in a part of the channels. For example, specifically, the terminal determines backoff counter values for each of the plurality of channels, measures energy of a signal received according to each channel, and adjusts each backoff counter value according to a measurement result of energy. Herein, in the part of the channels included in the allocated UL resource, a backoff counter value reaches 0.

At step S2505, the terminal performs UL transmission in the part of channels. That is, the terminal may transmit a signal in the part of the channels, where the CAP is successful, among the channels, and may not transmit a signal in some other channels, that is, in at least one channel where the CAP fails.

Although not illustrated in FIG. 25, the terminal may keep performing a CAP operation in at least one channel where the CAP fails. As an example, in case a CG-PUSCH or a PUSCH including a RB set#1 and a RB set#2 is configured or scheduled during a slot n or a slot n+1, even if a CAP is successful only in the RB set#1 at start time of the slot n, the terminal may start a transmission in the RB set#1 and perform the CAP for the RB set#2. If the CAP for the RB set#2 is successful at start time of the slot n+1, the terminal may start a CG-PUSCH or PUSCH transmission for the RB set#1 and the RB set#2 from the slot n+1.

However, in this case, a RB set combination included in the transmitted CG-PUSCH or PUSCH may be different according to each slot/symbol. Thus, in case a RB set combination constituting a CG-PUSCH or PUSCH becomes different according to each slot/symbol, in order to help a base station with reception, a terminal may include information on a RB set combination according to each slot/symbol in a CG-PUSCH, a PUSCH or a DM-RS. In other words, by using at least a portion of a UL signal, the terminal may transmit information indicating some channel(s) used for UL transmission based on CAP success on a current transmission occasion.

In addition, in case a time interval for transmitting only a part of RB sets of a configured/indicated resource is equal to or longer than a predetermined time (e.g., one slot or a predefined or preset time), a rule may be defined to the effect that a corresponding CG-PUSCH or PUSCH transmission should be stopped. Thus, waste of a UL resource on account of repeated CAP failure may be reduced. Corresponding operations of a terminal are described in FIG. 26 below.

*289FIG. 26 illustrates an example of another procedure of transmitting a signal according to success of a CAP in a portion of allocated channels in a wireless communication system according to an embodiment of the present disclosure. FIG. 26 exemplifies a method for operating a terminal.

Referring to FIG. 26, at step S2601, a terminal succeeds in a CAP in a part of allocated channels. Specifically, the terminal determines backoff counter values for each of the allocated channels, measures energy of a signal received according to each channel, and adjusts each of the backoff counter values according to a measurement result of energy. Herein, in the part of the channels included in an allocated UL resource, a backoff counter value reaches 0.

At step S2603, the terminal performs UL transmission in the part of the channels. That is, the terminal may transmit a signal in the part of the channels, where the CAP is successful, among the channels, and may not transmit a signal in another part of channels, that is, in at least one channel where the CAP fails. Although not illustrated in FIG. 26, the terminal may keep performing a CAP operation in at least one channel where the CAP fails.

At step S2605, the terminal determines whether transmission in the part of the channels continues for a threshold time or more. Herein, the threshold time may be predefined or set by a base station. For example, prior to this procedure or during this procedure, the terminal may receive information related to the threshold time from the base station. If a time for performing the transmission in the part of the channels does not reach the threshold time, the terminal may keep performing the transmission in the part of channel at step S2603.

If the transmission in the part of the channels continues for the threshold time or more, at step S2607, the terminal suspends transmission in all of the channels. For example, if an allocated resource is a CG-PUSCH, the terminal may stop the transmission in the part of the channels and request the base station to release the CG-PUSCH.

According to the above-described embodiments, in case a CAP is successful in a part of channels, a terminal may keep performing a CAP operation in at least one remaining channel. That is, the terminal may attempt UL transmission again in at least one remaining channel. However, according to another embodiment, the terminal may not attempt UL transmission in at least one remaining channel but wait for DL reception. That is, the terminal may perform UL transmission in the part of the channels and wait for DL reception in remaining channels.

[Embodiment#4] Through CAP application of the above-described Embodiment #3, in the case of a terminal capable of performing an FD operation, a channel occupancy start time may be different according to each channel. Herein, a start time of COT may be defined as follows.

(1) Embodiment #4-1: In case a set of channels, where a terminal performs a multi-channel CAP operation, is referred to as 'set_CH' or 'channel set', if any one of channels in the set_CH starts being occupied, a time when the channel occupancy starts may be defined as a start time of COT. In other words, one COT may be defined at one time according to each set_CH. As shown in Table 6 above, a length of a maximum COT (MCOT) is defined according to a channel access priority class (CAPC) value, a start time of one COT is defined according to each_CH, and an MCOT length may be applied from the defined start time. For example, as shown in FIG. 19, even if a start time of channel occupancy is different according to each RB set or channel, a start time of a COT may be defined as a slot n, and channel occupancy of a terminal may be allowed only for a duration within an MCOT from the slot n.

FIG. 27 illustrates an example of a procedure of transmitting a signal according to a channel occupancy time in a wireless communication system according to an embodiment of the present disclosure. FIG. 27 exemplifies a method for operating a terminal.

Referring to FIG. 27, at step S2701, a terminal succeeds in a CAP for a first channel in a first slot. Accordingly, the terminal may configure an MCOT in the first slot, and transmission of a signal may subsequently be allowed for the MCOT. Herein, the MCOT may be determined based on a priority class of the terminal for the first channel.

At step S2703, the terminal succeeds in a CAP for a second channel in a second slot. Herein, the terminal may succeed in the CAP for the second channel, while a transmission in the first slot is being performed. In other words, the terminal succeeds in the CAP for the second channel before a COT of the first channel expires. That is, while the terminal transmits a signal in the first channel, the terminal may receive a signal in the second channel and identify that the second channel is in idle state based on the received signal. Accordingly, the terminal configures an MCOT in the second slot, and a transmission of a signal may subsequently be allowed for the MCOT. Herein, according to an embodiment, the MCOT may be determined based on an end time of the COT in the first channel.

At step S2705, the terminal performs transmissions in the first channel and the second channel based on an MCOT that expires simultaneously. That is, the terminal may configure a same expiration time of an MCOT for the first channel and the second channel and perform a UL transmission. That is, when CAP success is determined for a plurality of channels, even if a determination time of CAP success is different according to each channel, the terminal may terminate the MCOT at a same time. Accordingly, when the terminal continuously transmits a signal during an interval allowed in each channel, signal transmissions in the first channel and the second channel are all terminated at a same time. However, if transmissions of all signals are completed during an interval shorter than the MCOT, a transmission may be terminated in any one of the first channel or the second channel.

(2) Embodiment #4-2: A start time of a COT may be independently defined according to each channel or each group of channels belonging to a set_CH. If two channels with different channel occupancy start times because of different CAP success times have different CAPCs or carry an independent UL signal, each of the channels may be preferably treated as having started a COT independently of each other, and it may be desirable to apply a different MCOT limit. For example, as shown in FIG. 19, in case a start time of channel occupancy is different according to each RB set or channel, a start time of a COT on the RB set#1 may be defined as a slot n, and the channel occupancy of a terminal may be allowed only for a duration within an MCOT from the slot n. On the other hand, a start time of a COT on the RB set#2 may be defined as a slot n+1, and the channel occupancy of the terminal may be allowed only for a duration within the MCOT from the slot n+1.

FIG. 28 illustrates an example of another procedure of transmitting a signal according to a channel occupancy time in a wireless communication system according to an embodiment of the present disclosure. FIG. 28 exemplifies a method for operating a terminal.

Referring to FIG. 28, at step S2801, a terminal succeeds in a CAP for a first channel in a first slot. Accordingly, the terminal may configure a COT in the first slot and subsequently transmit a signal for the COT. Herein, the COT may be determined based on a priority class of the terminal for the first channel.

At step S2803, the terminal succeeds in a CAP for a second channel in a second slot. Herein, the terminal may succeed in the CAP for the second channel, while a transmission in the first slot is being performed. In other words, the terminal succeeds in the CAP for the second channel before a COT of the first channel expires. That is, while the terminal transmits a signal in the first channel, the terminal may receive a signal in the second channel and identify that the second channel is in idle state based on the received signal. Accordingly, the terminal configures a COT in the second slot and subsequently transmit a signal for the COT. Herein, according to an embodiment, the COT may be determined based on a priority class of the terminal for the second channel.

At step S2805, the terminal performs transmissions in the first channel and the second channel based on an MCOT that expires independently. That is, the terminal may configure an end time of the MCOT in the first channel and an end time of the MCOT in the second channel independently based on a CAP success time in each channel and perform a UL transmission.

As shown in the embodiment described with reference to FIG. 28, in case a CAP operation for multiple channels is performed based on an FD operation, MCOT configuration according to CAP success of each channel may be independently performed. However, according to another embodiment, a rule may be defined such that among channels belonging to a set_CH, only for channels not belonging to a same carrier/BWP, a COT start time is allowed to be independently managed as in Embodiment #4-1, and for channels belonging to a same carrier/BWP, a COT start time may be identically configured as in Embodiment #4-2.

According to the various embodiments described above, while a base station and/or a terminal capable of operating in FD mode performs a transmission in a specific band, a CAP may be simultaneously performed through reception in a band adjacent to the band, and a transmission may be initiated after the CAP is successful, which enables a radio resource to be efficiently utilized.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

Industrial Applicability

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method for operating a terminal in a wireless communication system, the method comprising:

    receiving system information including information related to a communication band;
    receiving configuration information related to distinguishing an uplink resource and a downlink resource in the communication band;

based on at least one of the system information or the configuration information, performing a first channel access procedure (CAP) for a first channel and a second channel included in the communication band;

based on the first CAP being successful in the first channel, transmitting a signal in the first channel; and

performing a second CAP for the second channel during transmission of the signal in the first channel, wherein the configuration information includes information related to a first threshold for energy detection (ED) for the first CAP and a second threshold for ED for the second CAP.

2. The method of claim 1, wherein the configuration information indicates that a subband wise (SB)-FD operation is allowed in a frequency band including the first channel and the second channel.

3. The method of claim 1, wherein the configuration information indicates that a link direction of at least one of the first channel and the second channel is determined based on a result of the first CAP or the second CAP.

4. The method of claim 1, wherein the performing of the second CAP for the second channel during the transmission of the signal in the first channel comprises performing the second CAP for the second channel based on a guard band including RBs equal to or greater than a threshold being configured between the first channel and the second channel.

5. The method of claim 1, further comprising receiving information related to a threshold of a guard band between the first channel and the second channel to determine whether the second CAP for the second channel is allowed during the transmission of the signal in the first channel.

6. The method of claim 1, wherein the second threshold is configured to be greater than the first threshold.

7. The method of claim 1, wherein a difference between the first threshold and the second threshold is determined according to self-interference capability of the terminal.

8. The method of claim 1, wherein the information related to the first threshold and the second threshold includes a value indicating the difference between the first threshold and the second threshold.

9. The method of claim 1, wherein the first channel and the second channel are included in an uplink resource that is dynamically scheduled or is allocated in a configured grant (CG) method, and

wherein a transmission for the entire uplink resource is suspended based on a signal transmission in the first channel, excluding the second channel, lasting for a threshold time or longer.

10. The method of claim 1, wherein based on the second CAP for the second channel being successful, an end time of a maximum channel occupancy time (MCOT) of the first channel and an end time of an MCOT of the second channel are configured to be identical to each other.

11. The method of claim 1, wherein based on the second CAP for the second channel being successful, the end time of the MCOT of the first channel and the end time of the MCOT of the second channel are configured independently of each other.

12. A terminal in a wireless communication, the terminal comprising:

a transceiver; and
a processor coupled with the transceiver,
wherein the processor is configured to:

transmit system information including information related to a communication band,
transmit configuration information related to distinguishing an uplink resource and a downlink resource in the communication band,
based on at least one of the system information or the configuration information, perform a first channel access procedure (CAP) for a first channel and a second channel included in the communication band,
based on the first CAP being successful in the first channel, transmit a signal in the first channel, and
perform a second CAP for the second channel during transmission of the signal in the first channel, and
wherein the configuration information includes information related to a first threshold for energy detection (ED) for the first CAP and a second threshold for ED for the second CAP.

13. A communication device comprising:

at least one processor; and
at least one computer memory coupled with the at least one processor and storing an instruction that instructs operations when executed by the at least one processor,
wherein the operations comprises:

transmitting system information including information related to a communication band;
transmitting configuration information related to distinguishing an uplink resource and a downlink resource in the communication band;
based on at least one of the system information or the configuration information, performing a first channel access procedure (CAP) for a first channel and a second channel included in the communication band;
based on the first CAP being successful in the first channel, transmitting a signal in the first channel; and
performing a second CAP for the second channel during transmission of the signal in the first channel, and
wherein the configuration information includes information related to a first threshold for energy detection (ED) for the first CAP and a second threshold for ED for the second CAP.

14. A non-transitory computer-readable medium storing at least one instruction, the non-transitory computer-readable medium comprising the at least one instruction that is executable by a processor,
wherein the at least one instruction controls a device to:

transmit system information including information related to a communication band,
transmit configuration information related to distinguishing an uplink resource and a downlink resource in the communication band,
based on at least one of the system information or the configuration information, perform a first channel access procedure (CAP) for a first channel and a second channel included in the communication band,
based on the first CAP being successful in the first channel, transmit a signal in the first channel, and
perform a second CAP for the second channel during transmission of the signal in the first channel, and
wherein the configuration information includes information related to a first threshold for energy detection (ED) for the first CAP and a second threshold for ED for the second CAP.

**FIG. 1**

**FIG. 2**

Radio Frame 10ms

Subframe 1ms

| 0 | 1 | 2 | 3 | 4 | 5 | 6 | 7 | 8 | 9 |

Fixed Size

Subframe={1,2,4} Slots

Slot

| 0 | 1 | 2 | 3 |

Slot={7,14} Symbols

Symbol

| 0 | 1 | 2 | 3 | 4 | 5 | 6 | 7 | 8 | 9 | 10 | 11 | 12 | 13 |

Size depends on subcarrier spacing

Mini-Slot
(URLLC)

Mini-Slot={2,4,7} Symbol

**FIG. 3**

One Subframe

$14 \cdot 2^\mu$ OEDM Symbol

$k = N^\mu_{RB} N^{RB}_{SC} - 1$

$N^\mu_{RB} N^{RB}_{SC} - 1$ Subcarrier

$N^{RB}_{SC}$ Subcarrier

Resource Block

Resource Element
- In a resource grid, $(k, \bar{l})$
- In a resource block, $(k, l)$

$k = 0$

$l = 0$

$l = 14 \cdot 2^\mu - 1$

**FIG. 4**

**FIG. 5**

FIG. 6

INITIAL CELL SEARCH

SYSTEM INFORMATION RECEPTION

RANDOM ACCESS PROCEDURE

GENERAL DL/UL Tx/Rx

PSS/SSS& [DLRS]& PBCH

PDCCH/ PDSCH (BCCH)

PRACH

PDCCH/ PDSCH

PUSCH

PDCCH/ PDSCH

PDCCH/ PDSCH

PUSCH/ PUCCH

S701    S702    S703    S704    S705    S706    S707    S708

• DL/UL ACK/NACK
• UE CQI/PMI RI REPORT USING PUSCH AND PUCCH

**FIG. 7**

**FIG. 8A**

**FIG. 8B**

S910

Start CAP

S920

Step 1

S930

Step 4 — Y → S932 Terminate CAP → S934 Transemit Tx bust

N

S940

Step 2

S950

Step 3 — Y

N

S960

Step 5

S970

Step 6 — Y / N

**FIG. 9**

**FIG. 10**

**FIG. 11**

**FIG. 12**

EP 4 593 443 A1

**FIG. 13**

**FIG. 14**

**FIG. 15**

Carrier #0
Subband-wise Full Duplex

Carrier #0
Spectrum-Sharing Full Duplex

## FIG. 16

| HD | SBFD | SBFD | SBFD | HD |
|----|------|------|------|----|
|    | DL   | DL   | DL   |    |
| DL | UL   | UL   | UL   | UL |
|    | DL   | DL   | DL   |    |

freq / time

## FIG. 17A

| HD | SFFD | SFFD | SFFD | HD |
|----|------|------|------|----|
|    | DL   | DL   | DL   |    |
| DL | DL + UL | DL + UL | DL + UL | UL |
|    | DL   | DL   | DL   |    |

freq / time

## FIG. 17B

**FIG. 18**

**FIG. 19**

BASE STATION
(2020)

TERMINAL
(2010)

FD SLOT CONFIGURATION
INFORMATION(S2001)

S2003 — PERFORM CAP FOR RB SET
CONFIGURED AS UL IN FD SLOT

**FIG. 20**

START

S2101

TRANSMIT CONTROL INFORMATION
RELATED TO COMMUNICATION
BAND AND LINK DIRECTION

S2103

PERFORM CAP OPERATION FOR
FIRST CHANNEL AND SECOND CHANNEL

S2105

TRANSMIT SIGNAL IN FIRST
CHANNEL ACCORDING TO CAP SUCCESS

S2107

PERFORM CAP OPERATION
IN SECOND CHANNEL

END

**FIG. 21**

START

S2201

RECEIVE CONFIGURATION
INFORMATION RELATED TO
LINK DIRECTION OF EACH RB SET

S2203

IDENTIFY WHETHER VARIABLE LINK
DIRECTION IS APPLIED TO EACH RB SET

S2205

PERFORM CAP FOR RB SET TO WHICH
VARIABLE LINK DIRECTION IS APPLIED

S2207

PERFORM CAP FOR RB SET FOR DL
TRANSMISSION AMONG RB SETS TO WHICH
FIXED LINK DIRECTION IS APPLIED

END

**FIG. 22**

BASE STATION
(2320)

TERMINAL
(2310)

REPORT OF BEING CAPABLLE
OF FD OPERATION(S2301)

CONFIGURATION INFORMATION RELATED TO
ED THRESHOLD WHICH IS APPLIED WHILE CAP
IS PERFORMED DURING UL TRANSMISSION(S2303)

S2305 ─── BASED ON CAP BEING PERFORMED
DURING UL TRANSMISSION,
APPLY ED THRESHOLD ACCORDING
TO CONFIGURATION INFORMATION

**FIG. 23**

START

PERFORMS MEASUREMENT TO
DETERMINE CHANNEL AVAILABILITY

S2401

PERFORM
UL TRANSMISSION DURING
MEASUREMENT?

S2403

NO

YES

DETERMINE WHETHER CHANNEL IS
BUSY/IDLE BY USING FIRST THRESHOLD

S2405

DETERMINE WHETHER
CHANNEL IS BUSY/IDLE BY
USING SECOND THRESHOLD

S2407

END

**FIG. 24**

START

S2501

OBTAIN UL RESOURCE INCLUDING
A PLURALITY OF CHANNELS

S2503

SUCCEED IN CAP IN
PART OF CHANNELS

S2505

PERFORM UL TRANSMISSION
IN PART OF CHANNELS

END

**FIG. 25**

START

SUCCEED IN CAP FOR PART
OF ALLOCATED CHANNELS
— S2601

PERFORM UL TRANSMISSION
IN PART OF CHANNELS
— S2603

TRANSMISSION
IN PART OF CHANNELS
CONTINUE FOR THRESHOLD
TIME OR MORE? — S2605

NO

YES

SUSPEND TRANSMISSION
IN ALL OF CHANNELS
— S2607

END

**FIG. 26**

START

S2701

SUCCEED IN CAP FOR FIRST
CHANNEL IN FIRST SLOT

S2703

SUCCEED IN CAP FOR SECOND
CHANNEL IN SECOND SLOT

S2705

PERFORM TRANSMISSION IN
FIRST CHANNEL AND SECOND
CHANNEL BASED ON MCOT
EXPIRING SIMULTANEOUSLY

END

**FIG. 27**

START

S2801

SUCCEED IN CAP FOR FIRST
CHANNEL IN FIRST SLOT

S2803

SUCCEED IN CAP FOR SECOND
CHANNEL IN SECOND SLOT

S2805

PERFORM TRANSMISSION IN
FIRST CHANNEL AND SECOND
CHANNEL BASED ON MCOT
EXPIRING INDEPENDENTLY

END

**FIG. 28**

## INTERNATIONAL SEARCH REPORT

International application No.

**PCT/KR2023/014514**

| A. | CLASSIFICATION OF SUBJECT MATTER |
|---|---|

**H04W 16/14**(2009.01)i; **H04W 74/08**(2009.01)i; **H04L 5/14**(2006.01)i; **H04L 5/00**(2006.01)i; **H04W 72/23**(2023.01)i; **H04W 72/04**(2009.01)i

According to International Patent Classification (IPC) or to both national classification and IPC

| B. | FIELDS SEARCHED |
|---|---|

Minimum documentation searched (classification system followed by classification symbols)

H04W 16/14(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 시스템 정보(system information), 채널(channel), CAP(channel access procedure), ED(energy detection), 임계치(threshold)

| C. | DOCUMENTS CONSIDERED TO BE RELEVANT |
|---|---|

| Category* | Citation of document, with indication, where appropriate, of the relevant passages | Relevant to claim No. |
|---|---|---|
| DX<br>DA | 3GPP; TSG RAN; Physical layer procedures for shared spectrum channel access (Release 17). 3GPP TS 37.213 V17.3.0. 21 September 2022.<br>See pages 15-17 and 25. | 1,3,6,8,12-14<br>2,4-5,7,9-11 |
| A | KR 10-2284378 B1 (LG ELECTRONICS INC.) 03 August 2021 (2021-08-03)<br>See paragraphs [0637]-[0651]; and figures 25-26. | 1-14 |
| A | KR 10-2393512 B1 (LG ELECTRONICS INC.) 04 May 2022 (2022-05-04)<br>See paragraphs [0612]-[0635]; and figures 32-34. | 1-14 |
| A | KR 10-2019-0057447 A (LG ELECTRONICS INC.) 28 May 2019 (2019-05-28)<br>See claims 1-6. | 1-14 |
| A | KR 10-2020-0080864 A (SAMSUNG ELECTRONICS CO., LTD.) 07 July 2020 (2020-07-07)<br>See paragraphs [0188]-[0199]; and figure 10. | 1-14 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 January 2024** | **04 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

<table>
<tr><td colspan="2"><b>INTERNATIONAL SEARCH REPORT</b><br>Information on patent family members</td><td colspan="2">International application No.<br><b>PCT/KR2023/014514</b></td></tr>
</table>

| Patent document cited in search report | Publication date (day/month/year) | Patent family member(s) | Publication date (day/month/year) |
|---|---|---|---|
| KR 10-2284378 B1 | 03 August 2021 | CN 111699652 A | 22 September 2020 |
| | | CN 111699652 B | 10 October 2023 |
| | | EP 3748889 A1 | 09 December 2020 |
| | | EP 3748889 B1 | 09 November 2022 |
| | | KR 10-2020-0074998 A | 25 June 2020 |
| | | KR 10-2188272 B1 | 09 December 2020 |
| | | US 10980055 B2 | 13 April 2021 |
| | | US 11457465 B2 | 27 September 2022 |
| | | US 2020-0305184 A1 | 24 September 2020 |
| | | US 2021-0144748 A1 | 13 May 2021 |
| | | WO 2019-156476 A1 | 15 August 2019 |
| KR 10-2393512 B1 | 04 May 2022 | CN 111066269 A | 24 April 2020 |
| | | CN 111066269 B | 12 July 2022 |
| | | EP 3618328 A1 | 04 March 2020 |
| | | EP 3618328 B1 | 07 September 2022 |
| | | EP 4120599 A1 | 18 January 2023 |
| | | JP 2020-521365 A | 16 July 2020 |
| | | JP 2022-058588 A | 12 April 2022 |
| | | KR 10-2019-0126178 A | 08 November 2019 |
| | | KR 10-2020-0074242 A | 24 June 2020 |
| | | KR 10-2124496 B1 | 19 June 2020 |
| | | KR 10-2262728 B1 | 10 June 2021 |
| | | US 10893535 B2 | 12 January 2021 |
| | | US 2020-0137780 A1 | 30 April 2020 |
| | | WO 2019-160354 A1 | 22 August 2019 |
| KR 10-2019-0057447 A | 28 May 2019 | AU 2016-222865 A1 | 21 September 2017 |
| | | AU 2016-222865 B2 | 26 November 2020 |
| | | CA 3015114 A1 | 01 September 2016 |
| | | CA 3015114 C | 20 June 2023 |
| | | CN 107580801 A | 12 January 2018 |
| | | CN 107580801 B | 30 March 2021 |
| | | CN 107624265 A | 23 January 2018 |
| | | CN 107624265 B | 29 June 2021 |
| | | CN 113472490 A | 01 October 2021 |
| | | CN 113472490 B | 28 July 2023 |
| | | EP 3261733 A1 | 03 January 2018 |
| | | EP 3261733 A4 | 10 October 2018 |
| | | EP 3261733 B1 | 29 December 2021 |
| | | EP 3297192 A1 | 21 March 2018 |
| | | EP 3297192 B1 | 11 December 2019 |
| | | EP 3297384 A1 | 21 March 2018 |
| | | EP 3297384 B1 | 01 July 2020 |
| | | EP 3618330 A1 | 04 March 2020 |
| | | EP 3618330 B1 | 03 November 2021 |
| | | EP 3694129 A1 | 12 August 2020 |
| | | EP 3694129 B1 | 29 September 2021 |
| | | ES 2775623 T3 | 27 July 2020 |
| | | ES 2834397 T3 | 17 June 2021 |
| | | HK 1248635 A1 | 19 October 2018 |
| | | JP 2018-520614 A | 26 July 2018 |

Form PCT/ISA/210 (patent family annex) (July 2022)

**INTERNATIONAL SEARCH REPORT**
Information on patent family members

International application No.

**PCT/KR2023/014514**

| Patent document cited in search report | | | Publication date (day/month/year) | Patent family member(s) | | | Publication date (day/month/year) |
|---|---|---|---|---|---|---|---|
| | | | | JP | 2018-523333 | A | 16 August 2018 |
| | | | | JP | 2018-532306 | A | 01 November 2018 |
| | | | | JP | 2019-118153 | A | 18 July 2019 |
| | | | | JP | 6437159 | B2 | 12 December 2018 |
| | | | | JP | 6524259 | B2 | 05 June 2019 |
| | | | | JP | 6560445 | B2 | 14 August 2019 |
| | | | | JP | 7083781 | B2 | 13 June 2022 |
| | | | | KR | 10-1984603 | B1 | 31 May 2019 |
| | | | | KR | 10-2017-0139058 | A | 18 December 2017 |
| | | | | KR | 10-2017-0139571 | A | 19 December 2017 |
| | | | | KR | 10-2019-0141797 | A | 24 December 2019 |
| | | | | KR | 10-2059000 | B1 | 24 December 2019 |
| | | | | KR | 10-2096409 | B1 | 27 May 2020 |
| | | | | US | 10011208 | B2 | 03 July 2018 |
| | | | | US | 10212738 | B2 | 19 February 2019 |
| | | | | US | 10219287 | B2 | 26 February 2019 |
| | | | | US | 10455605 | B2 | 22 October 2019 |
| | | | | US | 10676006 | B2 | 09 June 2020 |
| | | | | US | 10681744 | B2 | 09 June 2020 |
| | | | | US | 10716139 | B2 | 14 July 2020 |
| | | | | US | 11147088 | B2 | 12 October 2021 |
| | | | | US | 11265928 | B2 | 01 March 2022 |
| | | | | US | 11405954 | B2 | 02 August 2022 |
| | | | | US | 2016-0243970 | A1 | 25 August 2016 |
| | | | | US | 2018-0115981 | A1 | 26 April 2018 |
| | | | | US | 2018-0124828 | A1 | 03 May 2018 |
| | | | | US | 2018-0139779 | A1 | 17 May 2018 |
| | | | | US | 2018-0249484 | A1 | 30 August 2018 |
| | | | | US | 2018-0312095 | A1 | 01 November 2018 |
| | | | | US | 2019-0150166 | A1 | 16 May 2019 |
| | | | | US | 2019-0150194 | A1 | 16 May 2019 |
| | | | | US | 2020-0015252 | A1 | 09 January 2020 |
| | | | | US | 2020-0260482 | A1 | 13 August 2020 |
| | | | | US | 2020-0296764 | A1 | 17 September 2020 |
| | | | | WO | 2016-138012 | A1 | 01 September 2016 |
| | | | | WO | 2016-182355 | A1 | 17 November 2016 |
| | | | | WO | 2016-182356 | A1 | 17 November 2016 |
| | | | | WO | 2016-182366 | A1 | 17 November 2016 |
| | | | | WO | 2017-039141 | A1 | 09 March 2017 |
| KR | 10-2020-0080864 | A | 07 July 2020 | CN | 113498629 | A | 12 October 2021 |
| | | | | EP | 3905829 | A1 | 03 November 2021 |
| | | | | US | 2022-0095375 | A1 | 24 March 2022 |
| | | | | WO | 2020-139047 | A1 | 02 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Institute of Electrical and Electronics Engineers. IEEE